# EUROPEAN PATENT SPECIFICATION

(11) **EP 2 567 035 B1**
(45) Date of publication and mention of the grant of the patent: **22.06.2016**
(21) Application number: 11777059.4
(22) Date of filing: 06.05.2011
(51) Int. Cl.: E04B 1/24, E02D 27/32, E04B 1/19, E04B 1/38, E04C 1/39, H02G 3/04, F16B 5/07, F16B 7/18, E04B 5/10

(54) **EVOLVING BUILDING STRUCTURES IMPROVEMENTS**
ENTWICKLUNG VON VERBESSERUNGEN FÜR GEBÄUDESTRUKTUREN
AMÉLIORATIONS APPORTÉES À DES STRUCTURES DE CONSTRUCTION ÉVOLUTIVES

(30) Priority: 06.05.2010 US 331897 P
(43) Date of publication of application: 13.03.2013
(73) Proprietor: 3088-7418 Québec Inc. Mad Mab Corp., Ville Mont-Royal, Québec H3R 1N7 (CA)
(72) Inventor: BOVET, Marc A., Laval, Québec H7P 6E2 (CA); TREMBLAY, Michelle, Ville Mont-Royal, Québec H3R 1N7 (CA)
(74) Representative: Tischner, Oliver
(86) International application number: PCT/CA2011/000532
(87) International publication number: WO 2011/137525

(56) References cited:
- EP-A1- 0 711 882
- EP-A1- 1 720 227
- EP-A1- 1 746 697
- WO-A1-2006/096997
- WO-A1-2009/073914
- DE-U1- 20 016 088
- FR-A1- 2 424 986
- GB-A- 2 112 492
- GB-A- 2 273 824
- US-A- 508 280
- US-A- 1 097 934
- US-A- 2 309 451
- US-A- 4 827 687
- US-A- 5 060 426

## Description

### BACKGROUND

### (a) Field

The subject matter disclosed generally relates to the field of construction work, and more specifically to evolving building structures.

### (b) Related Prior Art

There are many types of building structures kits. These building structures usually take the form of a kit including components that may be assembled together at a construction site. However, such kits typically have only a limited number of parts and therefore only serve to assemble buildings according to a few simple blueprints. Furthermore, many currently existing kits have only limited structural rigidity so that the buildings that are assembled using these kits are typically relatively simple buildings, such as sheds.

In cases where a kit is used to assemble a building, the builders have to resort to use traditional measurements techniques to assemble the kit components, with all associated risks of errors, and delays because of the measurement procedures.

Moreover, in cases where a kit is used to assemble a building, these kits must be complemented with additional parts to fully finish the building. Therefore, advantages brought by a kit are mitigated by the fact that some traditional construction techniques typically have to be used. These construction techniques often require cutting pieces of wood and of other materials on a construction site. Therefore, there is a need to take measurements, with all associated risks of errors, and to cut a piece of material, which often leads to unusable relatively small remaining pieces of material that are thrown away. These traditional construction techniques are therefore relatively time consuming and generate relatively large quantities of wastes.

Also, in current modular buildings assembled using a kit, the building is generally assembled, and there is no possibility to demount the structure and reassemble the structure into the original configuration, or in another configuration since some elements of the original kit had to be destroyed during the disassembly process.

Furthermore, in currently existing buildings, whether assembled using a kit or using traditional construction techniques, there are typically many thermal bridges between an interior of the building and an exterior of the building. These thermal bridges occur because insulation is typically inserted between an internal wall and an external wall of the building. These internal and external walls are typically attached to studs. Therefore, no insulation is provided at the location where these studs are found and heat may then be transferred between inside and outside the building through these studs. The thermal bridges typically cause relatively large heat losses during winter and heat admission into the building during summer.

Therefore, there exists a need in the industry to provide new and improved building structures.

Document WO 2006/096997 A1 discloses all the features of the preamble of claim 1.

### SUMMARY

An object of the present invention is therefore to provide improved evolving building structures.

The term "evolving" is intended to mean that the building structures of the present invention are constructed from assembly of prefabricated pieces that are demountable and reassemblable. The evolving building structures of the present invention can be easily modified to suit the needs of a family through its evolution or for new owners. Windows, doors and inside walls among others can be moved around in the building structure. In the extreme scenario, the entire evolving building structure can be demounted, moved and reassembled elsewhere in a different or same configuration. The evolving structures of the present invention may be preassembled from such prefabricated pieces in order to construct modules that may be used in the construction of an evolving building structure.

In a first embodiment there is disclosed a measurement free system for building a demountable and reassemblable building structure according to claim 1.

In a further example there is described a kit for building a demountable and reassemblable building structure, the kit comprising:
an exterior wall panel defining an interior and an exterior of the structure comprising a first exterior wall panel attachment and a second exterior wall panel attachment;
at least two substantially elongated posts, each of the post comprising at least one attachment receiving element for receiving a respective one of the first and second exterior wall panel attachment so that when the first and second wall panel attachments are received by the attachment receiving elements, the wall panel is spaced from the at least two posts defining a space between the panel and each of the posts; and
an insulation adapted to be engaged between each of the posts, adjacent the wall panel,
wherein the space substantially reduces a thermal bridge effect between the interior and the exterior of the structure and wherein the building structure is adapted to be partly or completely demounted and reassembled in a first configuration or a different configuration.

The insulation may be chosen from an insulation panel, an insulation fiber, an insulation foam, a sprayed insulation foam, mineral wool, cellulose or combinations thereof

The insulation panel may further comprise a lip projecting over each of the post.

The first and second wall panel attachment may each further comprise a securing element to secure the insulating panel in place.

The securing element may be at least one tongue.

In a further example there is described a demountable exterior wall panel attachment comprising:
a first demountable attachment member, to be received in a compatible attachment receiving element;
a second demountable attachment member, to receive a compatible exterior wall panel; and
a spacer, connecting the first and second attachment member.

The spacer may further comprise a securing element.

The securing element may be at least one tongue.

In a further example there is described a post anchor adjustable along the three dimensional axes comprising:
a base member to be embedded into a building foundation and having a mounting member thereon, the mounting member being adjustable along a first axis; and
a retaining member having
   a seat, mountable on the mounting member and being adjustable along a second axis, and
   a crown, to receive a post and being adjustable along a third axis,
wherein the post anchor is adjustable along the three dimensional axes to correctly align the post anchor to the foundation and level a post to be attached thereto.

The mounting member may comprise a first adjustment member, the first adjustment member allowing adjustment of the seat along the first axis.

The mounting member may comprise at least one threaded rod.

The mounting member may consist of two threaded rods.

The mounting member may comprise a mounting joint.

The mounting joint may be a dovetail joint.

The first adjustment member may comprise a threaded nut inserted on the threaded rod.

The seat may comprise a second adjustment member, the second adjustment member allowing adjustment of the seat along the second axis.

The second adjustment member may comprise at least one aperture.

The second adjustment member may comprise two apertures.

The at least one aperture may be at least one of a substantially circular, oval, elliptical, and rectangular apertures.

The second adjustment member may be adapted to receive a securing member.

The crown may comprise a third adjustment member, the third adjustment member allowing adjustment of the crown along the third axis.

The third adjustment member may comprise at least one aperture.

The at least one aperture may be at least one of a substantially circular, oval, elliptical, and rectangular aperture.

The third adjustment member may be to receive at least one securing member, the at least one securing member securing the crown to the seat.

The at least one securing member may be a threaded bolt and a threaded nut.

The crown may comprise a post receiving member.

The post receiving member may comprise a fastener receiving element.

The post receiving member may comprise a bracket.

The post anchor may be anchored to the building foundation by being embedded, by mechanical anchoring and/or by adhesive anchoring into said foundation.

In a further example there is described a kit for a demountable floor anchor system comprising:
at least two joists, each of the joist comprising at least one bridge element located at a predetermined position along the joist; and
at least one secondary joist comprising at each end a lug to be received in the bridge element,
wherein when the secondary joist is inserted into each of at least two joists, the secondary joist is substantially perpendicular to the at least two joists, and forms a planar surface to receive a flooring surface, and
wherein the demountable floor anchor system can be partly or completely demounted and reassembled in a first configuration or a different configuration.

The joist may comprise two or more bridge elements.

The two or more bridge elements may be spaced apart at fixed regular interval.

The lug may further comprise a fastener receiving element.

The joist may comprise at least one fastener receiving element.

The joist may comprise a plurality of fastener receiving elements.

The secondary joist may comprise at least one fastener receiving element.

The secondary joist may comprise a plurality of fastener receiving elements.

The fastener receiving elements may be spaced apart at fixed regular intervals.

The joist may comprise at least two joist sections to be connected together to form the joist.

The joist may further comprise at least one securing member, to join the at least two joist sections together to form the joist.

The beam may further comprise at least one aperture to receive plumbing, wiring, heating, ventilation, air conditioning (HVAC) ducting, and/or central vacuum ducting.

In a further example there is described a method of assembling a demountable and reassemblable floor structure comprising:
a) assembling a plurality of prefabricated floor components comprising a plurality of joists, and a plurality of secondary joists as described above into a demountable floor structure by placing the plurality of joists parallel to each other, and inserting the lug provided at each end of the secondary joist into each facing bridge element,
   wherein the joists and the secondary joists are substantially perpendicular to each other and form a planar surface to receive a flooring surface and wherein the floor structure is partly or completely demountable and reassemblable in the first configuration or a different configuration.

The method may further comprise a step b) after step a) :
b) fastening the plurality of secondary joists to the plurality of joists.

The method may further comprise a step c) after step b):
c) overlaying a flooring surface on the demountable floor structure.

In a further example there is described a method of assembling a demountable floor comprising:
a) forming a planar surface to receive a plurality of flooring tiles by assembling prefabricated floor components comprising a plurality of joists, and a plurality of secondary joists as described above, and a plurality of flooring tiles; into a demountable floor structure by placing the plurality of joists parallel to each other, and inserting the lug provided at each end of the secondary joist into each facing bridge element, and
b) overlaying the plurality of flooring tiles over the demountable floor structure,
wherein the joists and the secondary joists are substantially perpendicular to each other and form a planar surface to receive a plurality of flooring tiles and wherein the floor structure can be partly or completely demounted and reassembled in a first configuration or a different configuration.

The method may further comprise a step i) after step b):
i) fastening the plurality of secondary joists to the plurality of joists prior to or after overlaying of the flooring tiles.

In a further example there is described a demountable furring strip support comprising:
a demountable furring strip gripping member comprising
at least one of
a spacer, and
a first and second hook member connected at opposite ends of the spacer; and
a demountable attachment member, to be received in a compatible attachment receiving element and connected to the demountable furring strip gripping member.

The furring strip support may be integral.

In a further example there is described a kit for a demountable and reassemblable wall support system comprising:
at least one furring strip; and
at least two furring strip supports as defined above.

In a further example there is described a kit for a demountable and reassemblable wall comprising:
a wall panel defining an interior and an exterior,
at least one furring strip,
at least two furring strip support as defined above; and
at least two substantially elongated posts, each of the posts comprising at least one attachment receiving element for receiving a furring strip support so that when the at least one furring strip is received by the at least two furring strip support, the wall panel is spaced from the at least two substantially elongated posts defining a space between the panel and each of the substantially elongated posts; and
wherein the space substantially reduces a thermal bridge effect between the interior and the exterior demountable wall and wherein the wall can be partly or completely demounted and reassembled in a first configuration or a different configuration.

The kit may further comprise an insulation element adapted to be engaged between each of the post, adjacent the wall panel.

The insulation element may be at least one of an insulation panel, an insulation fiber, and an insulation foam.

The furring strip may be made of a sound dampening material.

In a further example there is described a demountable furring strip support comprising:
at least one elongated planar member comprising
   at least one furring strip gripping member having a first and second hook member to secure a furring strip; and
   a plurality of regularly spaced apart attachment receiving elements to receive compatible attachments.

The demountable furring strip support may comprise two elongated planar member connected by a spacer member.

The demountable furring strip support may be U-shaped.

The furring strip support may be integral.

In a further example there is described a kit for a demountable and reassemblable wall support system comprising:
at least one furring strip; and
at least two furring strip supports described above.

In a further example there is described kit for a demountable and reassemblable wall comprising:
a wall panel defining an interior and an exterior,
at least one furring strip,
at least two furring strip support described above; and
at least two substantially elongated posts, each of the posts comprising at least one attachment receiving element for receiving a demountable furring strip support so that when the at least one furring strip is received by the at least two furring strip support, the wall panel is spaced from the at least two substantially elongated posts defining a space between the panel and each of the substantially elongated posts; and
wherein the space substantially reduces a thermal bridge effect between the interior and the exterior demountable wall and wherein the wall can be partly or completely demounted and reassembled in a first configuration or a different configuration.

The kit may further comprise an insulation element adapted to be engaged between each of the post, adjacent to the wall panel.

The insulation element may be at least one of an insulation panel, an insulation fiber, and an insulation foam.

The furring strip may be made of a sound dampening material.

In a further example there is described a demountable electrical junction box support comprising:
a demountable furring strip gripping member comprising at least one of
a spacer, and
a first and second hook member connected at opposite ends of the spacer; and
a housing, connected to the demountable furring strip gripping member, the housing comprising an aperture to receive at least one electrical junction box.

The demountable electrical junction box support may be integral.

The demountable electrical junction box support may further comprise at least one electrical box therein.

In a further example there is described a kit for a demountable and reassemblable frame comprising:
a frame assembly having an interior and an exterior surface comprising
at least two frame assembly attachments facing the interior surface to secure the frame assembly to a respective first and second substantially parallel post,
the post having a plurality of regularly spaced apart attachment receiving elements to receive the frame assembly attachments;
a first and second furring strip receiving bar comprising
at least one furring strip gripping member to receive at least one furring strip;
the furring strip receiving bar adapted to be secured substantially perpendicular to the first and second substantially parallel posts to form a border around the frame assembly.

The furring strip gripping member may comprise a first and second hook member to secure a furring strip.

The furring strip receiving bar may be adapted to receive two furring strips.

The frame assembly may be a window assembly or a door assembly.

Features and advantages of the subject matter hereof will become more apparent in light of the following detailed description of selected embodiments, as illustrated in the accompanying figures.

### BRIEF DESCRIPTION OF THE DRAWINGS

Fig. 1A illustrates a view of a building structure according to one embodiment of the present invention.
Fig. 1B illustrates a view of a building structure according to one embodiment of the present invention.
Fig. 2A illustrates perspective back view of a substantially elongated post.
Fig. 2B illustrates perspective frontal views of a substantially elongated post.
Fig. 3A illustrates perspective view of a joist or beam according to one embodiment of the present invention.
Fig. 3B illustrates perspective view of a joist or beam according to one embodiment of the present invention.
Fig. 3C illustrates perspective view of a joist or beam according to one embodiment of the present invention.
Fig. 4 illustrates a side view of a substantially elongated post.
Fig. 5 illustrates a perspective view of a joist or beam according to one embodiment of the present invention.
Fig. 6A illustrates side perspective views of a wall structure.
Fig. 6B illustrates side perspective views of a wall structure.
Fig. 6C illustrates side perspective views of a wall structure.
Fig. 7 illustrates a side view of a demountable wall panel attachment.
Fig. 8A illustrates a perspective view of a post anchor.
Fig. 8B illustrates a perspective view of a post anchor.
Fig. 8C illustrates a perspective view of a post anchor.
Fig. 9A illustrates a demountable floor anchor system according to an embodiment of the present invention.
Fig. 9B illustrates a demountable floor anchor system according to an embodiment of the present invention.
Fig. 10 illustrates a demountable floor anchor system according to an embodiment of the present invention.
Fig. 11A illustrates a demountable floor anchor system according to an embodiment of the present invention.
Fig. 11B illustrates a demountable floor anchor system according to an embodiment of the present invention.
Fig. 12A illustrates a side view of a wall panel support system.
Fig. 12B illustrates a side view of a wall panel support system.
Fig. 13A illustrates a perspective view of an electrical junction box support.
Fig. 13B illustrates a perspective view of an electrical junction box support.
Fig. 13C illustrates a top view of a electrical junction box support.
Fig. 13D illustrates a perspective view of an electrical junction box support.
Fig. 13E illustrates a front view of an electrical junction box support.
Fig. 13F illustrates a front perspective view of an electrical junction box support.
Fig. 13G illustrates a back perspective view of an electrical junction box support.
Fig. 13H illustrates a front perspective view of an electrical junction box support.
Fig. 13I illustrates a front perspective view of an electrical junction box support.
Fig. 13J illustrates a front perspective view of an electrical junction box support.
Fig. 14A illustrates a front view of a frame structure.
Fig. 14B illustrates a front view of a frame structure.
Fig. 14C illustrates a section view of a frame structure.
Fig. 15A illustrated a side perspective view of a ceiling furring strip receiving elements according an embodiment of the present invention.
Fig. 15B illustrated a side perspective view of a ceiling furring strip receiving elements according an embodiment of the present invention.
Fig. 15C illustrated a flat pattern view of a ceiling furring strip receiving elements according an embodiment of the present invention.
Fig. 15D illustrated a side view of a ceiling furring strip receiving elements according an embodiment of the present invention.
Fig. 16A illustrated a perspective view of a frame assembly.
Fig. 16B illustrated a perspective view of a frame assembly.
Fig. 16C illustrated a perspective view of a frame assembly.
Fig. 16D illustrated a perspective view of a frame assembly.

### DETAILED DESCRIPTION

In embodiments there are disclosed a measurement free system for building a demountable and reassemblable building structure by assembling into a building structure of a first configuration a plurality of prefabricated building components that have a plurality of regularly spaced apart attachment receiving elements with a plurality of removable attachments engaged into the regularly spaced apart attachment receiving elements, and the attachments are demountably joining the plurality of prefabricated building components. The regular positioning of the regularly spaced apart attachment receiving elements provides for a measurement free assembly and the building structure is partly or completely demountable and reassemblable in the first configuration or a different configuration.

The various components of the kits are dimensioned so that they are readily attachable to the other components to which they are to be attached. Therefore, there is no need to cut parts, or measure parts to assemble the building structure using the kits.

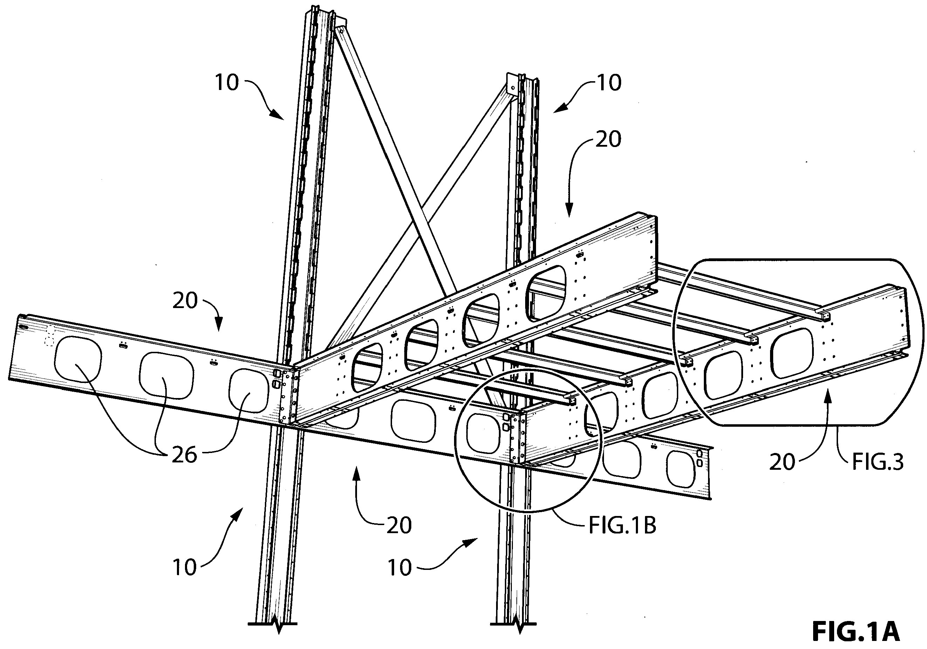

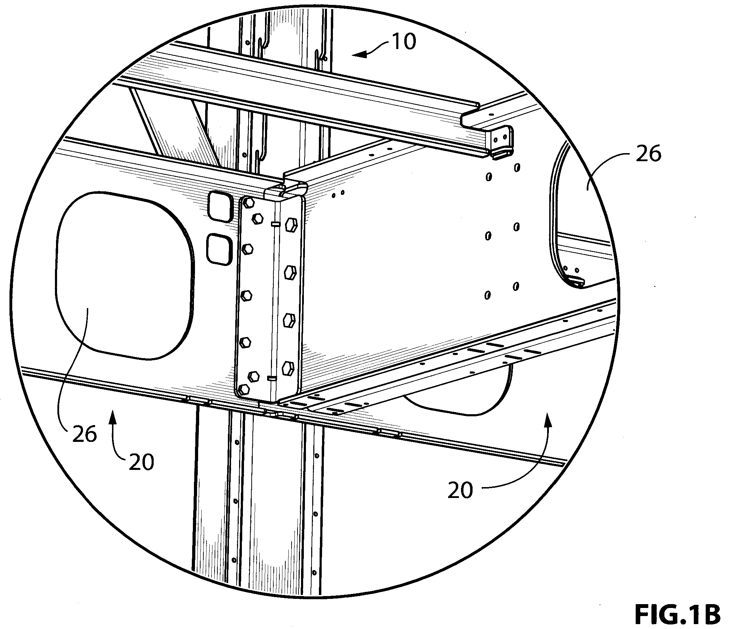

Now referring to Figs. 1, 2 and 3. There is disclosed a measurement free system for building a demountable and reassemblable building structure by assembling into a building structure of a first configuration a plurality of prefabricated posts, and joists, such as posts **10** and joists **20.**

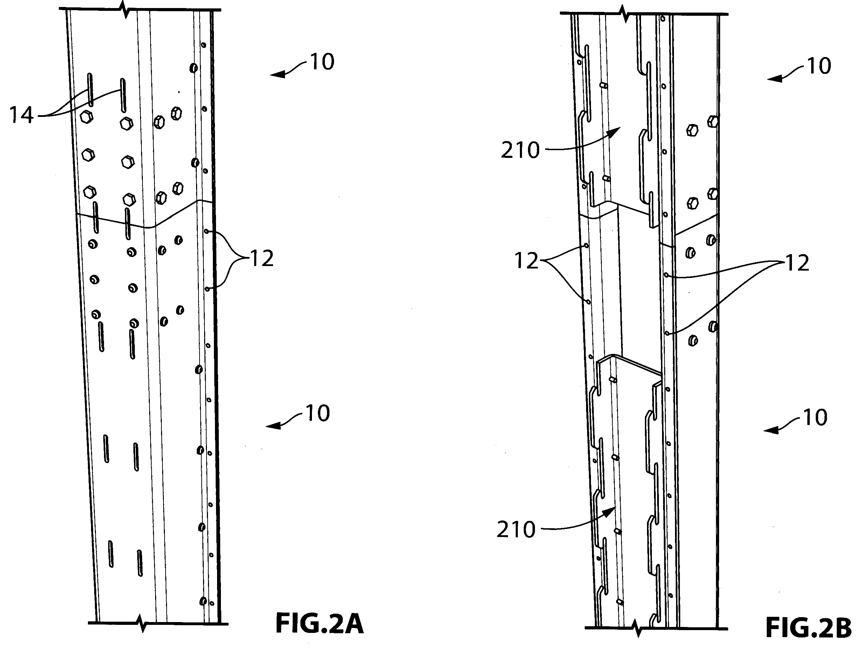

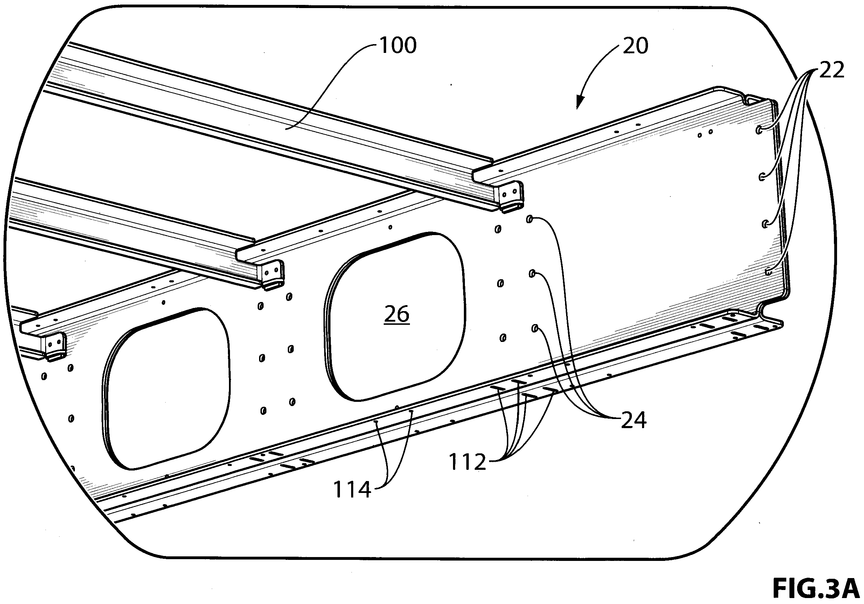

As shown in Figs. 1A and B. The posts **10** and joists **20** have a plurality of regularly spaced apart attachment receiving elements, such as elements **12, 14,** on the posts of Fig. 2 and elements **22** and **24,** on the joists shown in Fig. 3A. A plurality of removable attachments, such as combinations of bolts, rods and compatibles nuts as may be appreciated by the person skilled in the art, are engaged into the regularly spaced apart attachment receiving elements **12, 14, 22** and **24** and the attachments are demountably joining the plurality of posts **10** and joists **20.** The regular positioning of the regularly spaced apart attachment receiving elements **12, 14, 22** and **24** provides for measurement free assembly and the building structure is partly or completely demountable and reassemblable in the first configuration or a different configuration.

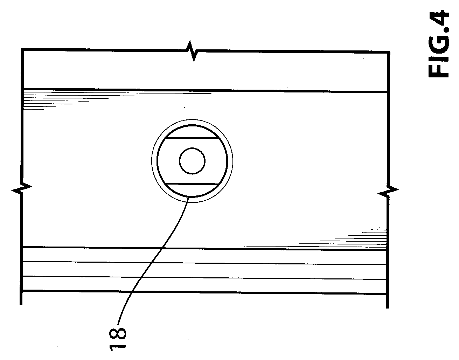

The posts **10** and joists **20** may comprise a number of apertures 18 (see Fig. 4) and **26** (see Fig. 1) that may receive plumbing and/or wiring such as electrical wiring, optical fiber cables, or any desired cabling that may be required to be used in the structure. The apertures may also be used to received heating, ventilating, and air conditioning (HVAC) ducting, ducting for central vacuum cleaners, or any other elements that may be required to be inserted in the structure.

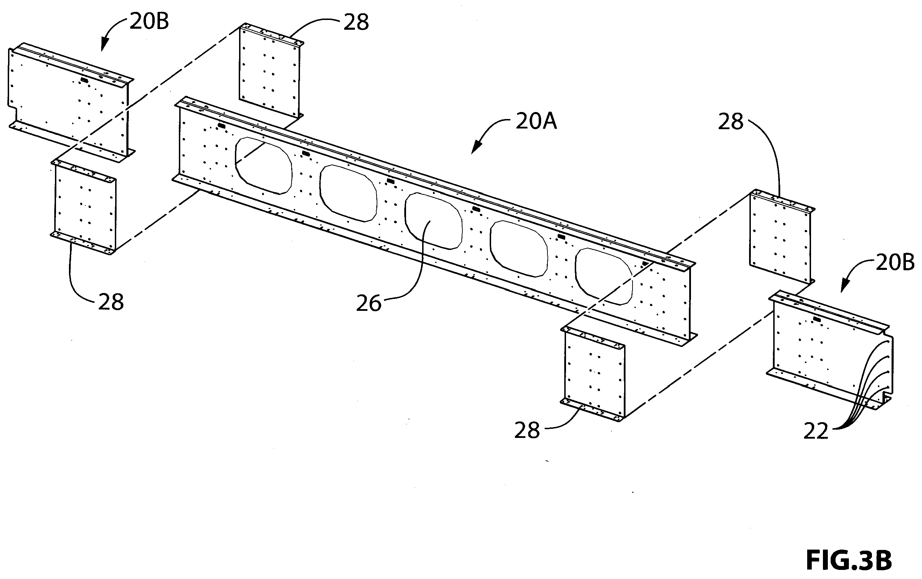

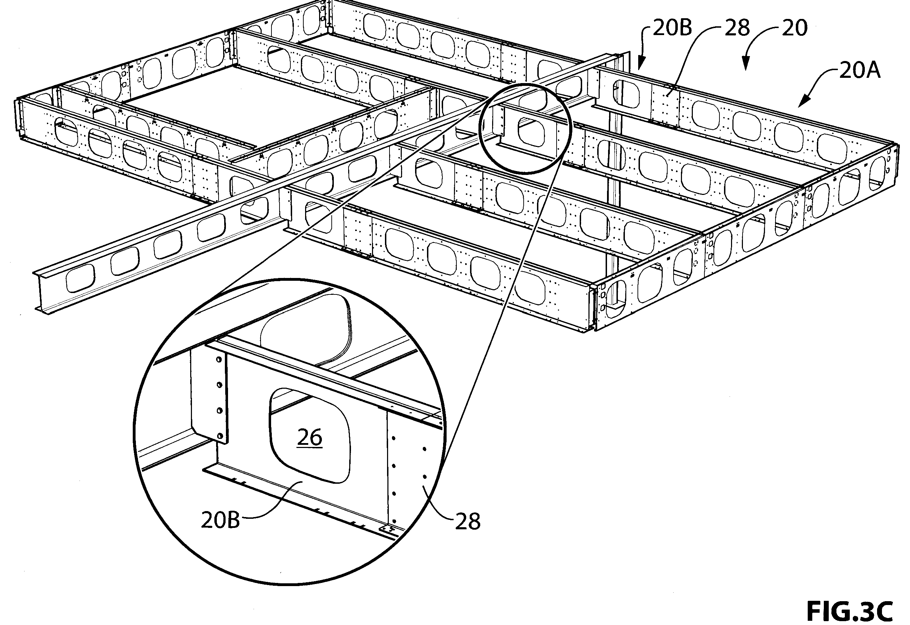

Now referring to Fig. 3B and C. The building structure of the present invention includes joists **20** that are formed of at least one elongated joist section **20A** and/or **20B.** The elongated joist sections **20A/20B** are joined at their ends by securing members **28,** which may connect the elongated joist sections by insertion of fasteners in attachment receiving elements present on both structures. The use of joists **20** that are assembled from shorter elongated sections is particularly advantageous as it allows the manufacture of sections that can be handled by one or a few workers without the need for heavy lifting equipment. This is quite advantageous when assembling a housing structure in a wooded area, as trees do not need to be cut to make way for the machinery normally required for assembly of long joists. Furthermore, transportation of the section of joist does not require long and heavy machinery as the sections will fit nicely inside regular truck load.

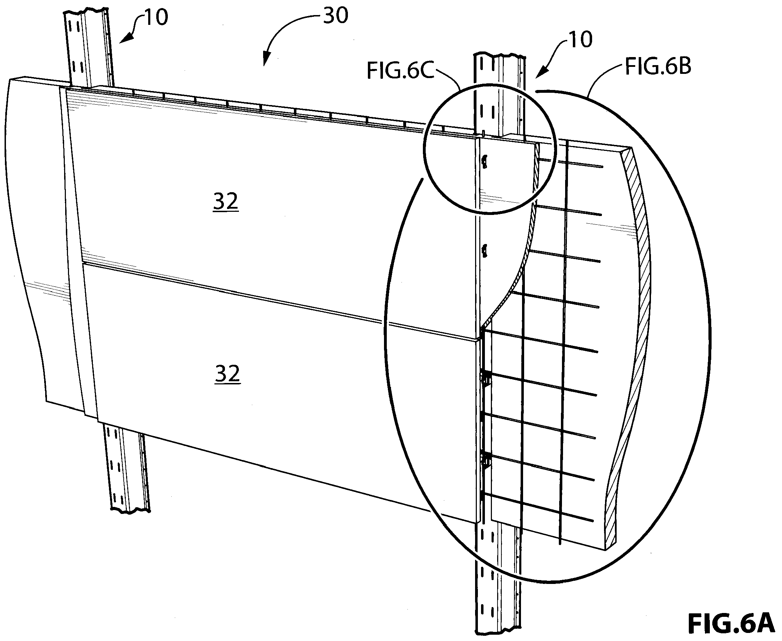

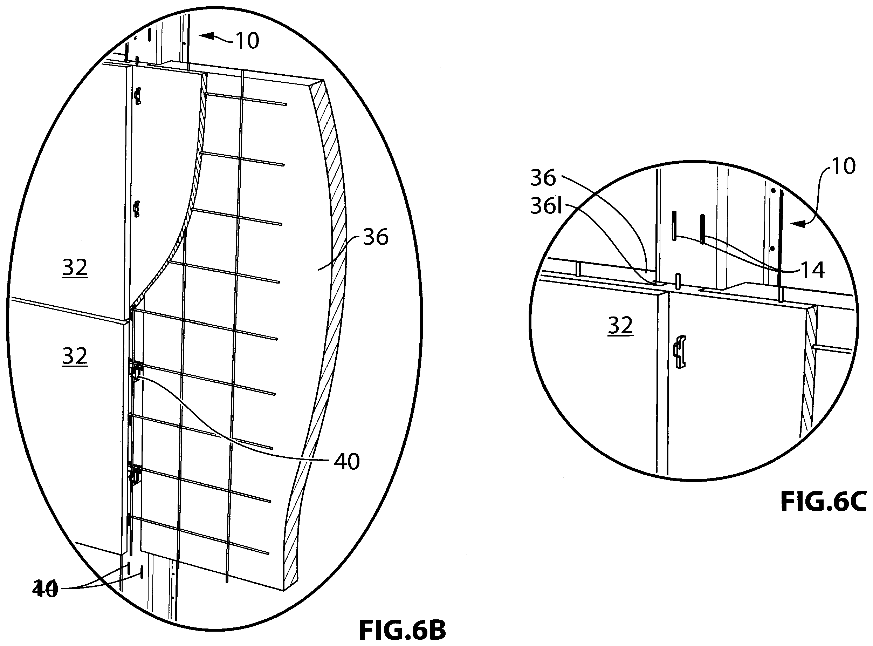

Now referring to Fig. 6. The building structure of the present example also includes a kit for building a demountable and reassemblable wall panel structure **30** which has a wall panel **32** defining an interior and an exterior of the structure. To connect the wall panel **32** to the posts **10,** attachments such as wall panel attachments **40** are used. Each of the substantially elongated posts **10** has a number of attachment receiving elements **14** to receive the wall panel attachment **40.** When the wall panel attachments **40** are received by the attachment receiving elements **14,** the wall panel **32** is spaced from the posts **10,** such that a space is defined between the wall panel **32** and each of the posts **10.** The space between the wall panel **32** and the posts **10** substantially reduces any thermal bridge effect that may occur between the interior and the exterior of the structure. The wall structure **30** may be partly or completely demounted and reassembled in a first configuration or a different configuration.

To further insulate the wall structure **30,** an insulation panel **36** may be inserted between wall panel **32** and the posts **10.** Other types of isolation are also contemplated, for example, mineral wool, sprayed insulation foam such as polyurethane, cellulose or any other types of insulation material. The insulation panel **36** may be frictionally engaged between each of the posts **10,** adjacent the wall panel **32.** The insulation panel **36** may comprise a lip **36l** that is projecting over each of the post **10,** further reducing any thermal bridging effect and thereby improving insulation. To prevent movement of the insulation panel **36,** the wall panel attachments **40** may be provided with a securing element. The securing element may be any suitable fastener, for example a wedge or a short elongated piece that is inserted through an aperture present in one example of the of wall panel attachments **40.** The securing element may be built integral the wall panel attachments **40,** for example as a section of the wall panel attachment **40** which is folded over and above the surface of the insulating panel **36** facing the wall panel **32,** thereby preventing the insulating panel **36** from being pushed toward the wall panel **32.** As shown in Fig. 6, the securing element may be a tongue **48** that may be folded over the insulating panel **36** from the wall panel attachment **40.**

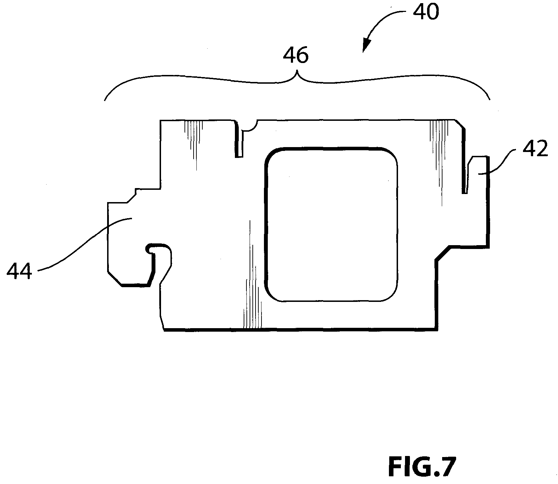

Now referring to Fig. 7, the demountable wall panel attachment **40** of the present example comprises a first demountable attachment member **42** which may be received in a compatible attachment receiving element such as attachment receiving element **14** in posts **10.** It also comprises a second demountable attachment member **44** which may receive a compatible wall panel **32;** and a spacer **46** connects the attachment member **42** and **44** together. The demountable wall panel attachment **40** may comprise a securing element, such as tongue **48** shown in Fig. 7.

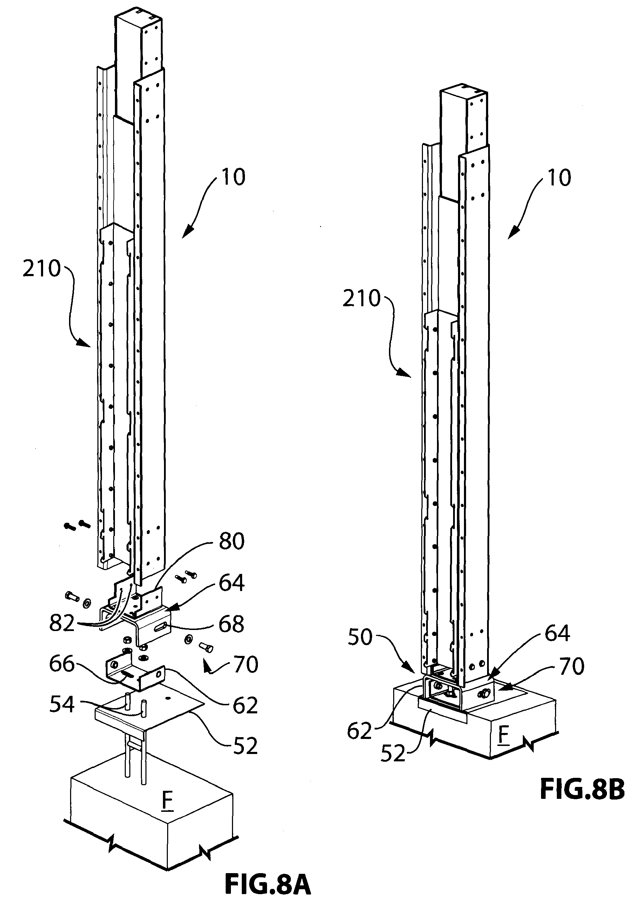

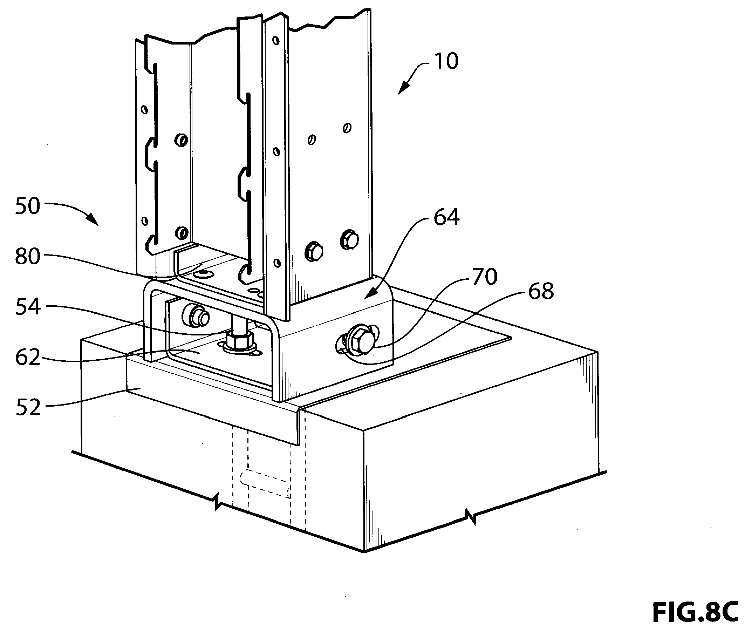

Now referring to Fig. 8. The building structure of the present example is suitable for being built on a foundation, such as a concrete foundation. To anchor the posts **10,** a post anchor may be used. A post anchor **50** of the present example comprises a base member **52** which may be anchored into a building foundation **F.** The anchoring of the base member **52** may be done by embedding the base member **52** into the foundation when it is first poured. The anchoring may also be an adhesive anchor. Adhesive anchors are for example resin anchors comprising steel studs, bolts and anchorages which are bonded into a substrate, usually masonry and concrete, using a resin based adhesive system. Ideally suited for high load applications, in virtually all cases the resulting bond is stronger than the base material itself and as the system is based on chemical adhesion, no load stress is imparted to the base material as with expansion type anchors and are therefore ideal for close to edge fixing, reduced center and group anchoring and use in concrete of unknown quality or low compressive strength. The anchoring may also be a mechanical anchoring, where a mechanical anchor is inserted (e.g. into a drilled hole) into the foundation by conventional means.

The base member **52** comprises a mounting member thereon. For example, the mounting member may be a rod or the likes, with a suitable mounting joint (e.g. a dovetail joint), or threads. A retaining member **60** is disposed over the base member **52,** and comprises a seat **62,** which is mountable on the mounting member, and a crown **64** which may receive a post 10, and is adjustable along a third axis.

The mounting member of the anchor **50** comprises a first adjustment member in order to be adjustable along a first axis. For example, a number of threaded rods **54** are disposed on base member **52,** and when seat **62** is mounted on the mounting member comprised of the threaded rods **54,** the position of the seat **62** on the mounting member may be adjusted by using a suitable assembly of threaded nuts on the threaded rods **54.**

The seat **62** comprises a second adjustment member which allows adjustment of the seat **62** along a second axis. For example, the seat **62** may comprise one or more apertures **66** that may receive a mounting member (e.g. threaded rods **54).** The aperture **66** is suitably shaped as substantially circular, oval, elliptical, or rectangular, so as to accommodate the shape of the preferred mounting member chosen. The second adjustment member may receive the mounting member therein, while leaving a space around the mounting member, such that the seat **62** may be moved back and forth in a desired direction along the second axis to adjust the position of the seat **62** as may be required to align the post anchor **50** with the other post anchors **50** of the entire building structure.

The crown **64** of the post anchor **50** also comprises a third adjustment member allowing adjustment of the crown along a third axis. For example, the crown **64** may comprise one or more aperture **68** that may receive a securing member (e.g. threaded bolt **70,** secured by a nut). The aperture **68** is suitably shaped as substantially circular, oval, elliptical, or rectangular, so as to accommodate the shape of the preferred securing member chosen. The third adjustment member may receive the securing member therein, while leaving a space around the securing member such that the crown **64** may be moved back and forth in a desired direction along the third axis to adjust the position of the crown **64** as may be required to align the post anchor **50** with the other post anchors **50** of the whole entire building structure. The three adjustment members therefore allow for the adjustment of the post anchor **50** along the three dimensional axes, thereby levelling the post **10** attached thereto.

To connect posts **10** on the post anchor **50,** the crown **64** comprises a post receiving member **80.** The post receiving member has one or more fastener receiving elements **82** that will align with the regularly spaced apart attachment receiving elements **12** of posts **10** so that a suitable attachment may be inserted therein to secure the post **10** on the crown **64** of the post anchor **50.** As exemplified in Fig. 8, the post receiving element comprises a U-shaped bracket, but any suitably shaped bracket may be used as a post-receiving member.

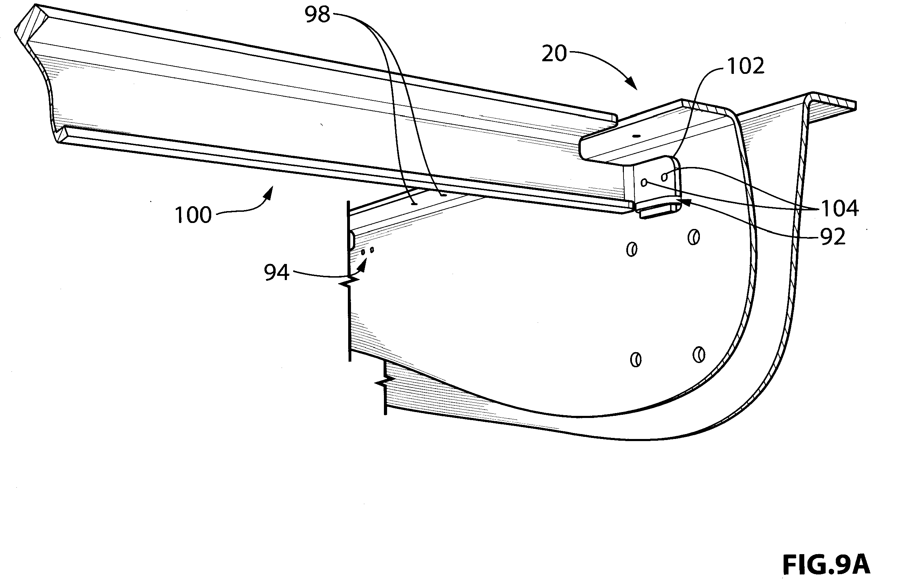

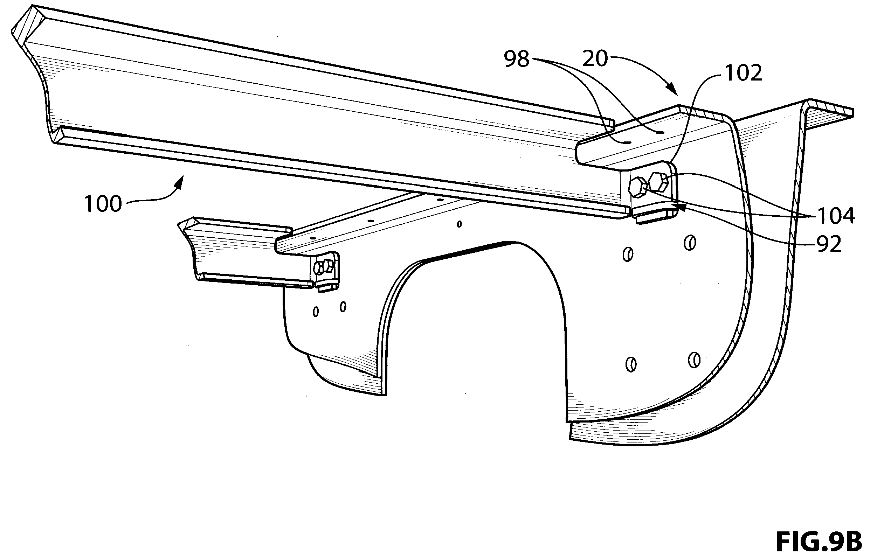

Now referring to Fig. 9A and B. The building structure of the present invention also includes a demountable floor anchor system. The floor anchor system has joists **20** comprising one or more bridge elements **92** located at a predetermined position along the joists **20.** The bridge elements **92** may also be spaced apart at fixed regular interval. The joists **20** may comprise at least two joist sections **(20A/20B)** to be connected together to form the joist **20.** The joist sections may be joined together at their ends by securing members **28,** which may connect the elongated joist sections by insertion of fasteners in attachment receiving elements present on both structures. The use of joists **20** that are assembled from shorter elongated sections is particularly advantageous as it allows the manufacture of sections that can be handled by one or a few workers without the need for heavy lifting equipment. This is quite advantageous when assembling a housing structure in a wooded area, as trees do not need to be cut to make way for the machinery normally required for assembly of long beams. Furthermore, transportation of the section of joist does not require long and heavy machinery as the sections will fit nicely inside regular truck load. Furthermore, this allows for the joining of multifunctional joist sections that may comprise, for example apertures to receive plumbing, wiring, heating, ventilation, air conditioning (HVAC) ducting, and/or central vacuum ducting.

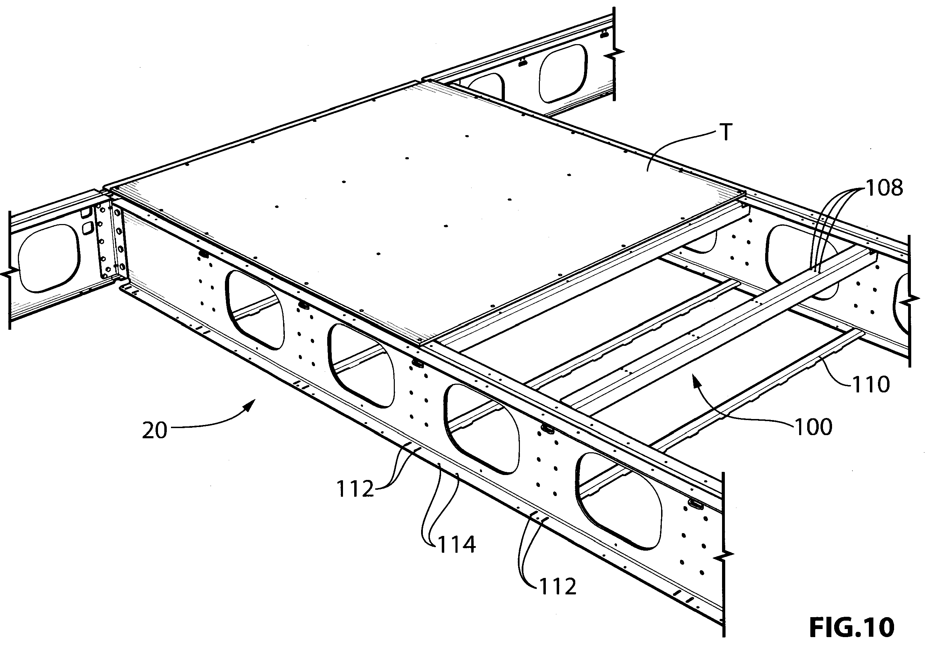

The floor anchor system has also secondary joists **100** comprising at each of their end a lug **102** that may be received in the bridge elements **92.** The secondary joists **100** are inserted into the joists **20,** substantially perpendicular to the joists, forming a planar surface that may receive a flooring surface, for example flooring tile T shown in Fig. 10, or other suitable flooring panels. The floor anchor system of the present invention may be partly or completely demounted and reassembled in a first configuration or a different configuration. This is useful in situations where a flooring surface is necessary to complete a phase of construction on a given floor or level of a building structure, and upon completion of the phase of construction, the flooring may be completely or partly demounted to create, for example, an entry point for further building materials or machinery inside the structure.

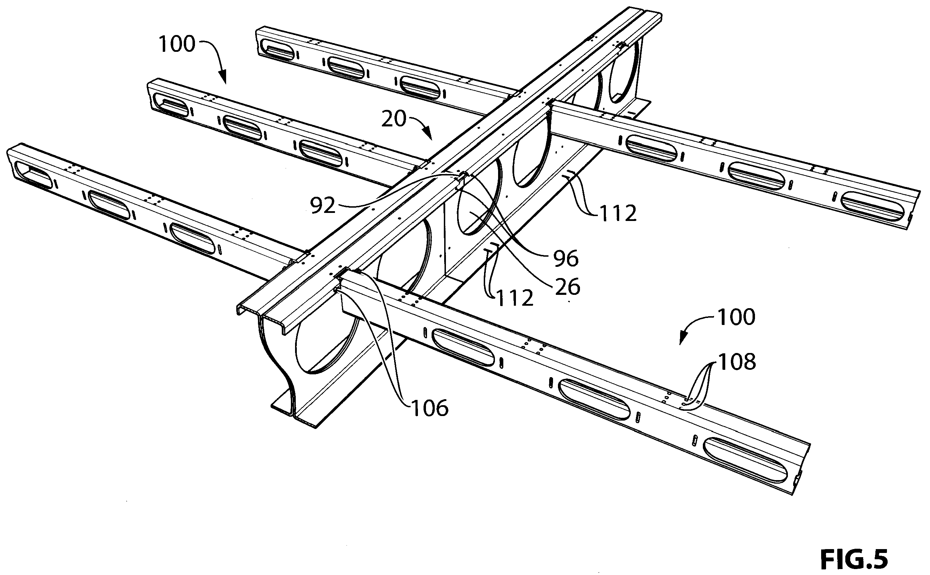

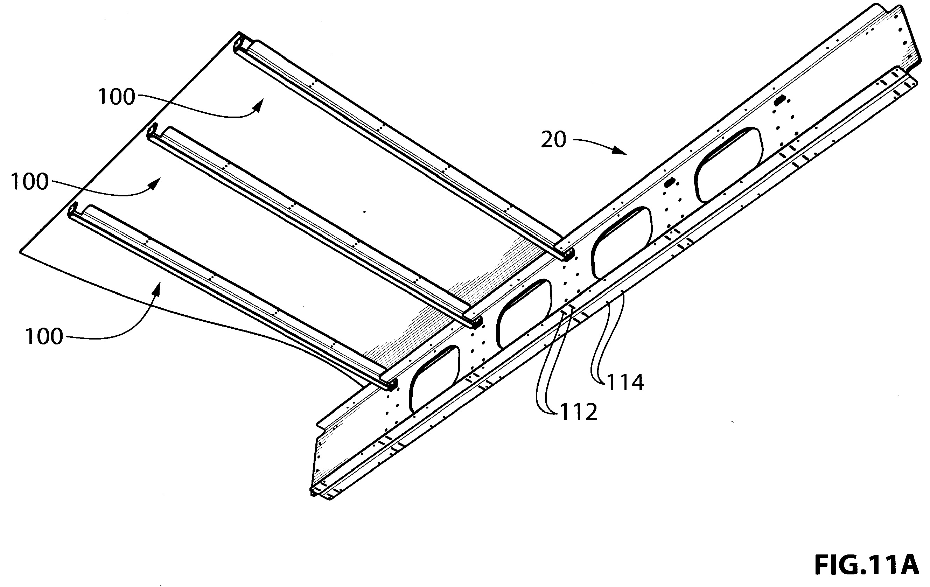

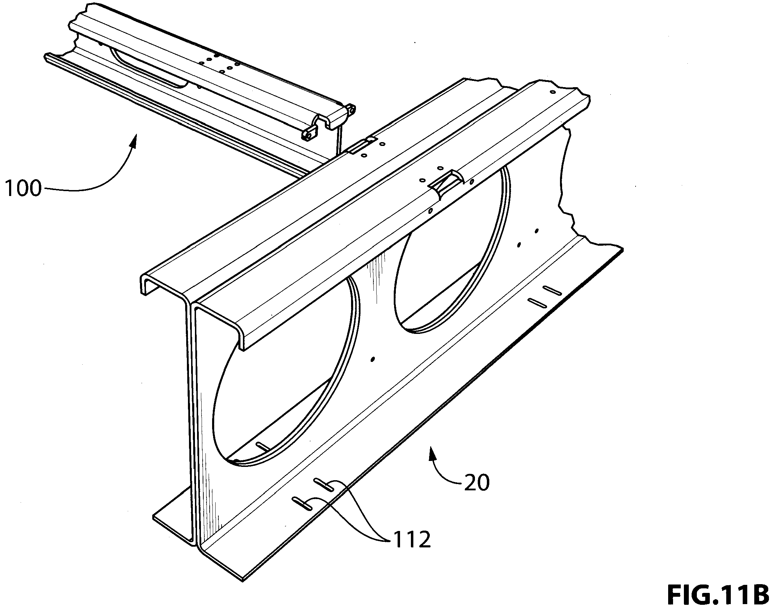

To further strengthen the floor anchor system, the joists **20** and the secondary joists **100** may be joined reversibly together. In one embodiment, the lug **102** present on the secondary joists **100** comprises a fastener receiving element **104** that aligns with a fastener receiving element **94** present on the joist **20.** Suitable fasteners may be inserted therein to reversibly join the secondary joists **100** to the joists **20** (see Fig. 9). In another embodiment, the secondary joist **100** comprises at each end one or more fastener receiving element **106** that align with a fastener receiving element **96** present on the joist **20.** Suitable fasteners may be inserted therein to reversibly join the secondary joists **100** to the joists **20** (see Figs. 5 and 11).

To further strengthen the flooring surface disposed on the floor anchor system of the present invention, the joists **20** and the secondary joists 100 include one or more fastener receiving elements **98** or **108,** that may be disposed at predetermined positions, and/or be spaced apart at fixed regular intervals.

In use, the demountable and reassemblable floor structure is built by assembling a plurality of prefabricated floor components including a plurality of joists **20,** and a plurality of secondary joists **100.** The plurality of joists **20** are placed parallel to each other, and the lugs **102** of the secondary joists **100** are inserted into each facing bridge elements **92.** After assembly, the joists **20** and the secondary joists **100** are substantially perpendicular to each other and form a planar surface that may receive a flooring surface (e.g. floor tiles T). The floor structure is partly or completely demountable and reassemblable in the first configuration or a different configuration by pulling the lugs **102** off the secondary joists **100.**

The floor structure may be solidified by fastening the plurality of secondary joists **100** to the plurality of joists **20,** and a usable floor may be built by overlaying a flooring surface on the demountable floor structure. Fastening of the plurality of secondary joists **100** to the plurality of joists **20** may be done before or after the flooring surface has been disposed over the planar surface.

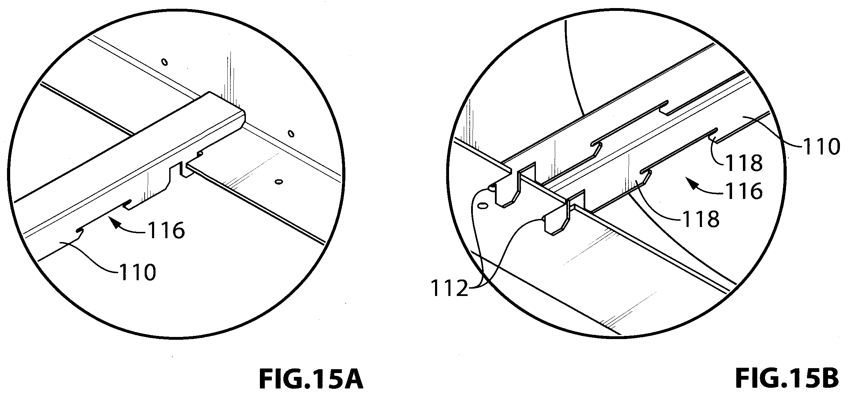

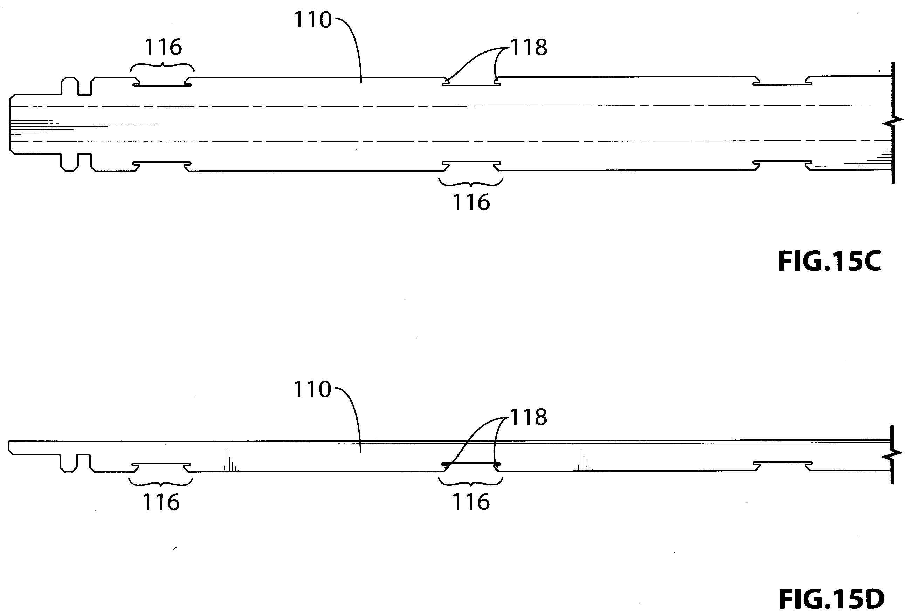

Now referring to Fig. 15A-D. After completion of the flooring, ceiling panels may be installed. This may be achieved by disposing perpendicular to the joists **20** a plurality of ceiling furring strip receiving elements **110.** The ceiling furring strip receiving elements **110** are inserted in receiving elements **112** which are disposed on the joists **20,** preferably at regular intervals. The ceiling furring strip receiving elements **110** may be fastened by regular means, or the end portion inserted into the receiving elements **112** may be bent in order to secure them in the receiving elements **112.** Furring strips **130** may then be inserted into the furring strip gripping members **116** which are disposed along the length of the ceiling furring strip receiving elements **110** and have opposed hook members **118** which are separated by a length of the ceiling furring strip receiving elements **110.** Ceiling panels may be attached to the furring strips **130** to constitute a ceiling. The ceiling panels may be any type of wall panel, for example a wood, a dry wall panel, etc.

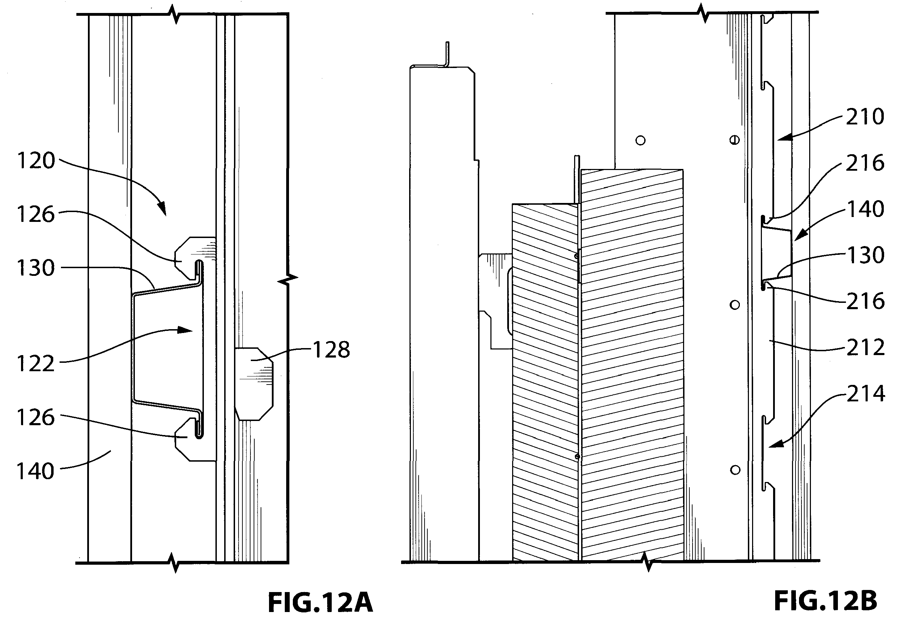

There is also disclosed a kit for a demountable and reassemblable wall. This kit contains a demountable furring strip support **120** (see Fig. 12A) having a demountable furring strip gripping member **122** which comprises one or more spacer **124,** and hook members **126** connected at opposite ends of the spacer **124.** The demountable furring strip support **120** also has a demountable attachment member **128** that is connected to the demountable furring strip gripping member **122.** The demountable attachment member **128** may be received in a compatible attachment receiving element, such as elements **14** of posts **10.** The demountable furring strip support **120** may be manufacture as a single, integral piece of material. The material of the furring strip support **120** may be a sound dampening material to provide the assembled walls with an additional level of sound proofing if required.. The wall panel may be any type of wall panel, for example a wood, a dry wall panel, etc.

The kit may also comprise another example embodiment of a demountable furring strip support **210,** which comprises an elongated planar member **212** that includes at least one furring strip gripping member **214** having first and second hooks **214.** A plurality of furring strip gripping member may be disposed on the edge of the elongated planar member so as to accommodate several furring strips **130.** Furthermore, the elongated planar member comprises a plurality of regularly spaced apart attachment receiving elements that may receive compatible attachments therein so as to affix the furring strip support **210** to a post **10.** The demountable furring strip support **210** may comprise two elongated planar member held substantially paralellel to each other by a spacer member. For example, the demountable furring strip support **210** may be a U-shaped integral structure.

In use, the demountable and reassemblable wall support system comprises furring strips **130** and two or more furring strip supports **120** or **210.** The furring strip **130** is inserted into and supported by the furring strip support **120** or **210,** and the assembly may be mounted on substantially elongated posts **10.** Also, kits for a demountable and reassemblable wall comprise one or more wall panels **140** that define interior and an exterior, one or more furring strips **130,** and two or more furring strip support **120** or **210.** The wall panel **140** may be any type of wall panel, for example a wood, a dry wall panel, etc. In use, the furring strips **130** are received by the furring strips supports **120** or **210,** and they are mounted into the attachment receiving elements (e.g. elements **14)** of two or more substantially elongated posts **10.** The wall panels **140** may be fixed to the furring strips **130** prior to or after the furring strips **130** and furring strips supports **120** or **210** have been combined. Once assembled and mounted on the substantially elongated posts **10,** the wall panel **140** is spaced from the substantially elongated posts **10** in such a manner that a space is defined between the wall panel **140** and each of the substantially elongated posts **10.** The space therein defined substantially reduces thermal bridge effects between the interior and the exterior demountable wall system. To complement the insulation of the wall, an insulation element may be added, engaged between each of the substantially elongated posts **10,** adjacent to the wall panel **140.** The insulation element may be an insulation panel, an insulation fiber, or insulation foam, sprayed insulation foam (e.g. polyurethane foam), mineral wool, cellulose or any other types of insulation material or combinations thereof.

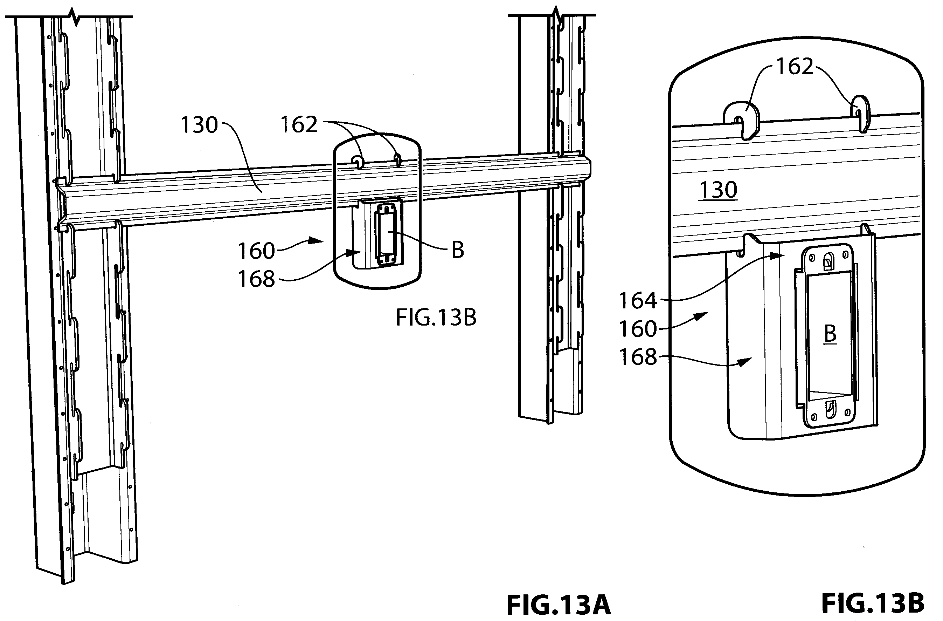

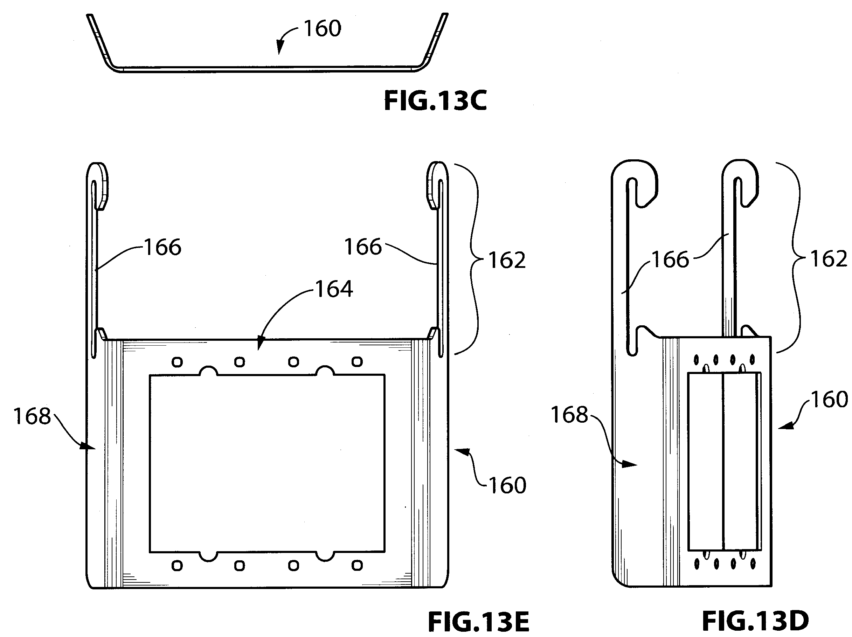

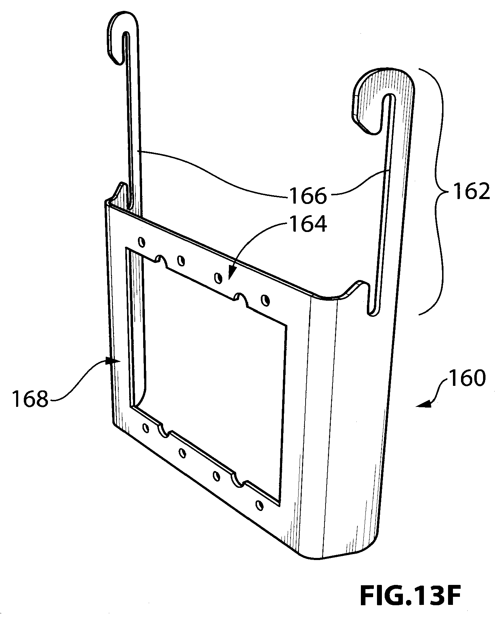

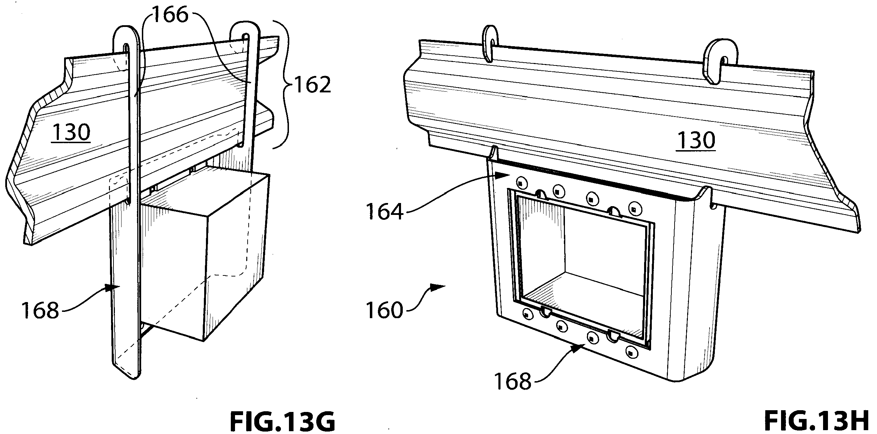

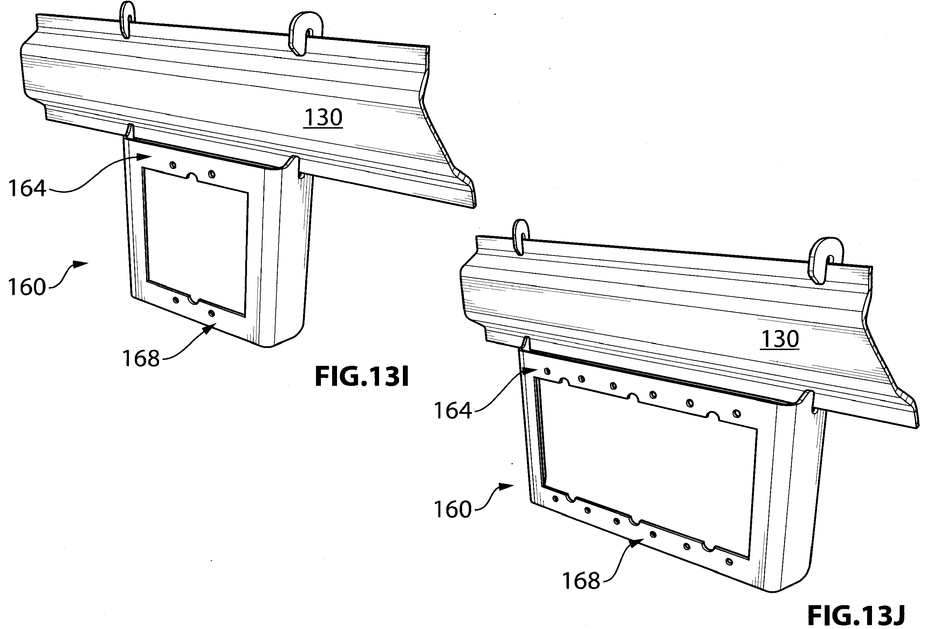

Now referring to Fig. 13A-J, the present example also includes a demountable electrical junction box support **160** that comprises a demountable furring strip gripping member **162** which has one or more spacer **164,** and hook member **166** connected to the spacer 166. The demountable furring strip gripping member **162** may comprise two hook members **166** connected at opposite ends of the spacer **164** (Fig. 13A-J). A housing **168** is connected to the demountable furring strip gripping member **162.** The housing **168** contains an aperture that may receive at least one electrical junction box B (Figs. 13A and B). The housing **168** may contain an aperture capable of receiving two or more electrical junction box B or one large, two slotted electrical box B is shown in Figs. 13D-F, H and J. The demountable electrical junction box support **160** may be built integrally from a single piece of material, and it may also be prepared with an electrical box B already comprised therein. The demountable furring strip gripping member **162** may be connected to the spacer **164** at a right angle or at an angle different than a right angle. Preferably, the demountable furring strip gripping member **162** may be connected to the spacer **164** at an obtuse angle (Fig. 13C), for example from about 100° to about 120°, or from about 100° to about 110°, and preferably 110°.

In use, an electrical box B is preferably inserted into the demountable electrical junction box support **160** prior to its positioning on a furring strip **130.** The electrical box B may also be inserted after the demountable electrical junction box support **160** is positioned on the furring strip 130. The electrical box B may be fixed to the demountable electrical junction box support **160** through any suitable fixation elements premade in the housing **168** and/or spacer **164.** According to one embodiment, the fixation element may be holes premade to receiving conventional fasteners such as screws, but other commonly used means known in the art are also contemplated. For example, complementary clips and grooves, or friction engagement means would be suitable. The demountable electrical junction box support **160** is mounted on the furring strip **130** by the pressure of a hand so that the rims of the furring strip **130** a inserted in the hook member **166.** The demountable electrical junction box support **160** allows positioning of the electrical box B at any position on the furring strip **130,** irrespective of the position of vertical beams.

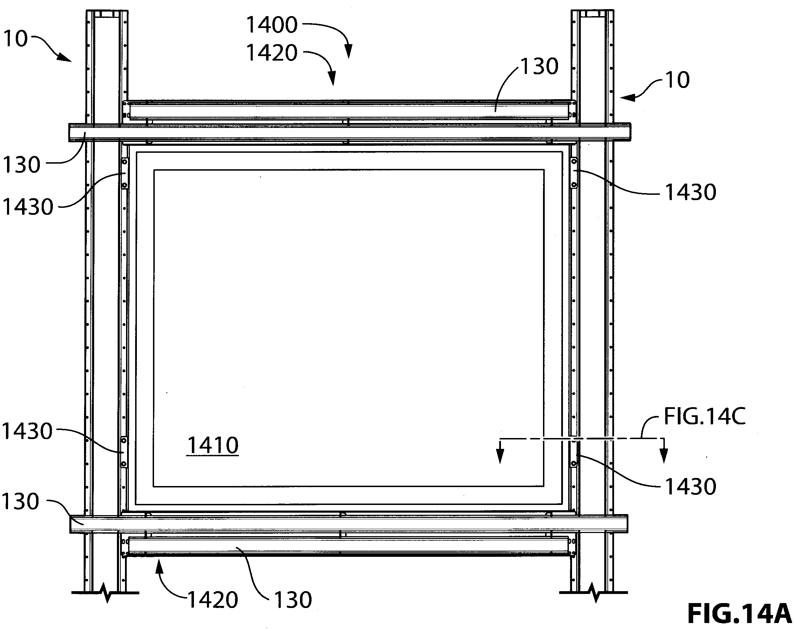

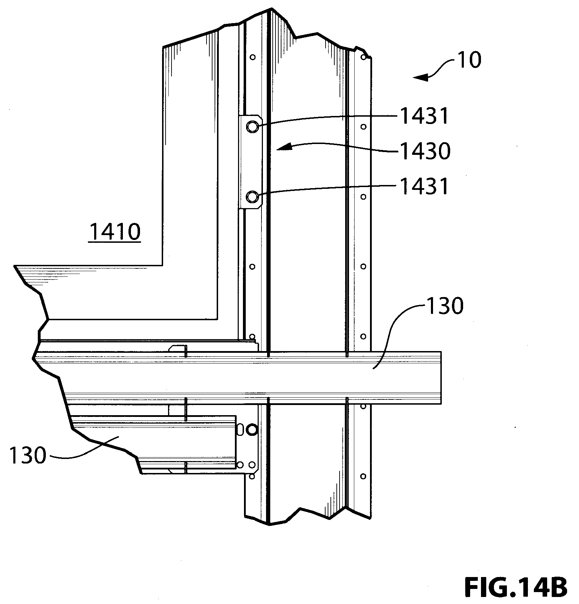

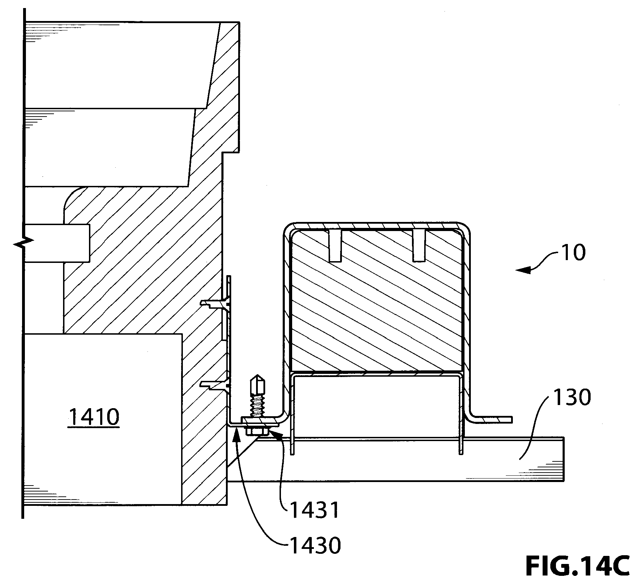

Now referring to Fig. 14A-C. The present example also includes a kit for a demountable and reassemblable frame **1400** comprising a frame assembly **1410** such as a window assembly or a door assembly, having an interior and an exterior surface. The interior of the frame assembly has at least two frame assembly attachments **1430** facing the interior surface. The frame assembly attachments **1430** may secure the frame assembly **1400** to a respective first and second substantially parallel post **10.** The posts **10** have a plurality of regularly spaced apart attachment receiving elements that may receive the frame assembly attachments **1430,** by insertion, for example, of a fastener **1431.** Alternatively, the frame assembly attachments **1430** may be configured to directly insert and secure into the attachment receiving elements. The frame **1400** also comprises a first and second furring strip receiving bar **1420** which comprises at least one furring strip gripping member **1440** that may receive at least one furring strip **130.** The furring strip receiving bar **1420** may be secured substantially perpendicular to each of the substantially parallel posts to form a border around the frame assembly **1400.** The furring strip gripping member **1440** comprises first and second hook members, opposed and facing each other so as to secure a furring strip therein. The furring strip receiving bar **1420** may receive two or more furring strips **130.**

The demountable and reassemblable frame **1400** is particularly advantageous to easily install windows in a building structure. Windows are commonly installed from the exterior of the building, where they are inserted in the space prepared for such purpose. This does not pose particular problems for windows that are installed at ground level, but for windows that are installed above ground level, workers must lift the windows frames to the appropriate height, using lifting equipment and/or scaffolding. This type of work always comprises a degree of risk to the workers that may fall off the equipment or scaffolding. With the frame of the present example the window frames are preferably simply brought inside the building structure, and workers only need to slide them in the aperture define by the posts **10** and the furring strip receiving bar **1420,** and secure them as required. All the work may be performed inside the structure, where the risk of falling a great distance to the ground is practically inexistent. The window frames **1400** may also be installed from the exterior of the building structure if desired.

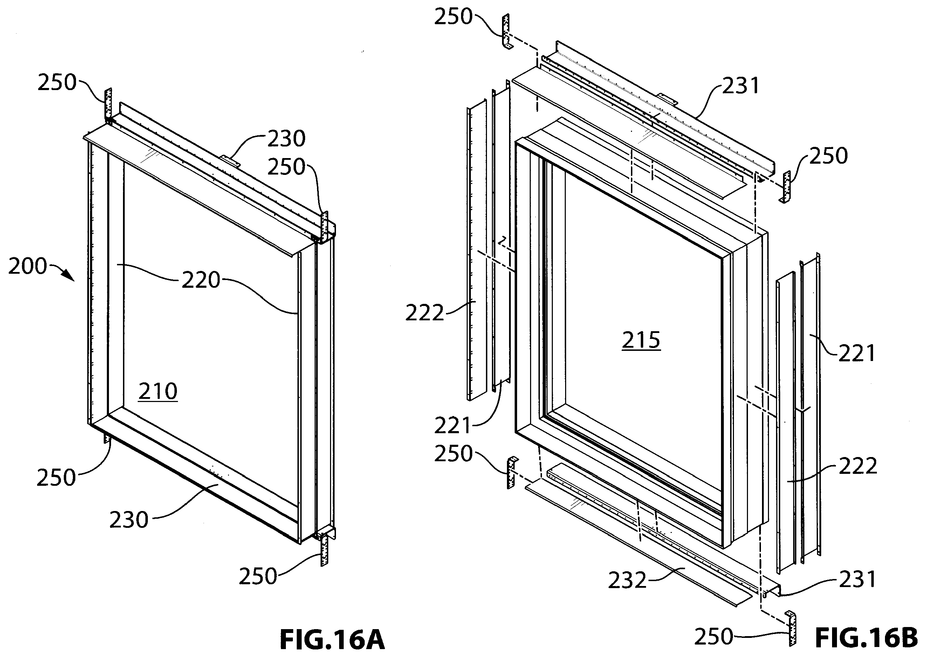

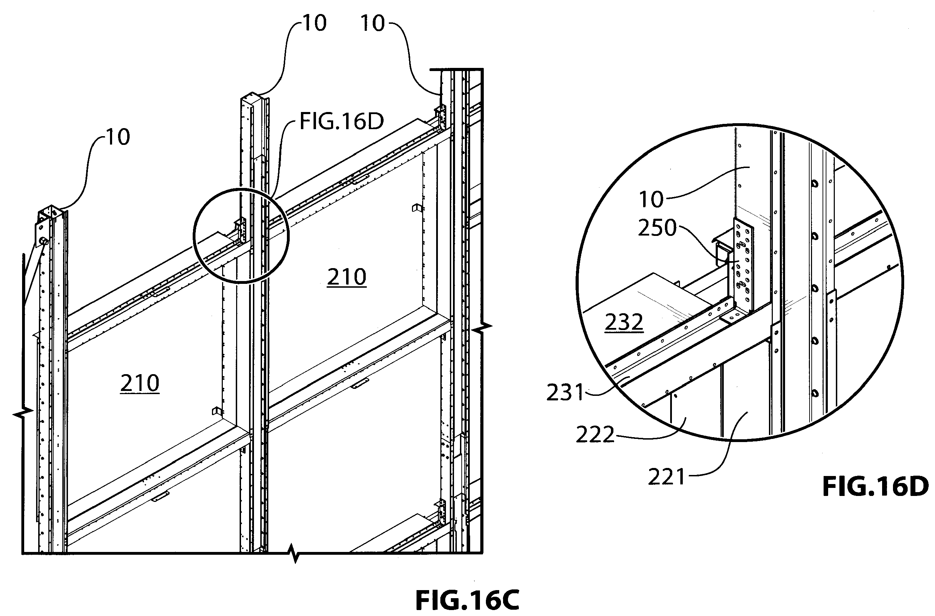

Now referring to Fig. 16A-D. The present example also includes a kit for a demountable and reassemblable frame assembly **200** defining an aperture **210,** and comprising vertical frame elements **220** and horizontal frame elements **230,** and at least two frame assembly attachments **250.** The frame **200** may be used to frame window assembly **215** or a door assembly, having an interior and an exterior surface. The frame assembly attachments **250** may secure the frame assembly **200** to a respective first and second substantially parallel post **10.** The posts **10** have a plurality of regularly spaced apart attachment receiving elements that may receive the frame assembly attachments **250,** by insertion, for example, of a fastener. Alternatively, the frame assembly attachments **250** may be configured to directly insert and secure into the attachment receiving elements. The frame assembly attachments **250** may connect to regularly spaced apart attachment receiving elements on the surface of the posts **10** which is parallel and adjacent to the vertical frame elements **220** (such as in Fig. 16C-D). The frame assembly attachments **250** may be shaped and/or positioned to connect to regularly spaced apart attachment receiving elements on the surface of the posts **10** which is perpendicular to the vertical frame elements **220.** The vertical and horizontal frame elements **220** and **230** may be manufactured as unitary elements, or they may be manufactured as several element such as first and second vertical frame elements **221** and **222,** and first and second horizontal frame elements **231** and **232,** which may also be fastened to the posts **10** by insertion of fasteners into regularly spaced apart attachment receiving elements. The frame assembly **200** may be assembled prior to insertion of the window assembly **215,** such that insulation material may also be added prior to the insertion of the window assembly. This is convenient in cases where the window assembly is made from a material that may be deformed by the pressure caused by the expansion of sprayed insulation material, for example, PVC made window assemblies. The window frames **200** may also be installed from the exterior of the building structure if desired.

## Claims

1. A measurement free system for building a demountable and reassemblable building structure comprising:
- a plurality of prefabricated building components comprising a plurality of posts (10) and joists (20), each having a plurality of regularly spaced apart attachment receiving elements (12, 14, 22, 24);
- a plurality of removable attachments for engaging into the regularly spaced apart attachment receiving elements (12, 14, 22, 24) for demountably joining the plurality of posts (10) and joists (12),
wherein the regularly spaced apart attachment receiving elements (12, 14, 22, 24) allow for assembling measurement free building structures which are demountable and re-assemblable in different configurations; and a demountable ceiling anchor system comprising:
o at least two joists (20), each of said joists (20) comprising receiving elements (112) located at a predetermined position along the joist (20) for receiving a ceiling furring strip receiving element (110);
o at least one ceiling furring strip receiving element (110) comprising a gripping member (116) and adapted to receive at least one furring strip (130) within the gripping member (116); said at least one ceiling furring strip receiving element (110) having a first end for attaching to a first receiving element (112) of a first joist (20) and a second end for attaching for attaching to a second receiving element (112) of a second joist (20), and being disposed perpendicular to the first joist (20) and the second joist (20);
o at least one furring strip (130) to be inserted into the gripping member (116) of the ceiling furring strip receiving element (110); wherein when two or more furring strips (130) are inserted in said ceiling furring strip receiving element(110) they form a planar surface to receive a ceiling surface.

2. The system as defined in claim 1, wherein each joist (20) comprises an upper surface for receiving a floor (T) and a lower surface for receiving the ceiling surface, and wherein the receiving elements (112) adapted to receive the ceiling furring strip receiving element (110) are provided in the lower surface of the joists (20).

3. The system as defined in claim 1, wherein the joist (20) comprises at least one elongated joist sections (20A/20B), to be connected together to form the joist (20) and at least one securing member to join the at least two elongated joist sections (20A/20B) together to form the joist.

4. The system as defined in claim 3, wherein the posts (10) and the joists (20) each further comprises at least one aperture (18) to receive plumbing wiring, heating, ventilation, air conditioning (HVAC) ducting, and/or central vacuum ducting.

5. The system of any one of the previous claims, comprising:
An exterior wall panel (32) defining an interior and an exterior of the structure comprising a first exterior wall panel attachment (40) and a second exterior wall panel attachment (40);
at least two substantially elongated posts (10), each of the post comprising at least one attachment receiving element (14) for receiving a respective one of the first and second exterior wall panel attachment (40) so that when the first and second wall panel attachments (40) are received by the attachment receiving elements (14), the wall panel is spaced from the at least two posts (10) defining a space between the panel and each of the posts; and
an insulation (36) adapted to be engaged between each of the posts, adjacent the wall panel,
wherein the space substantially reduces a thermal bridge effect between the interior and the exterior of the structure and wherein the building structure is adapted to be partly or completely demounted and reassembled in a first configuration or a different configuration.

6. The measurement free system for building a demountable and reassemblable building structure of any one of the previous claims, further comprising a demountable exterior wall panel attachment (40) comprising:
• a first demountable attachment member (42), to be received in a compatible attachment receiving element;
• a second demountable attachment member (44), to receive a compatible exterior wall panel; and
• a spacer (46), connecting the first and second attachment member.

7. The measurement free system for building a demountable and reassemblable building structure of any one of the previous claims, further comprising a post anchor (50) adjustable along the three dimensional axes comprising:
a base member (52) to be anchored into a building foundation and having a mounting member thereon, the mounting member being adjustable along a first axis; and
a retaining member (60) having
a seat (62), mountable on the mounting member and being adjustable along a second axis, and
a crown (64), to receive a post and being adjustable along a third axis,
wherein the post anchor (50) is adjustable along the three dimensional axes to correctly align the post anchor to the foundation and level a post attached thereto.

8. The system for building a demountable and reassemblable building structure of claim 5, further comprising a kit for a demountable floor anchor system comprising:
at least two joists (20), each of the joist comprising at least one bridge element (92) located at a predetermined position along the joist; and
at least one secondary joist (100) comprising at each end a lug (102) to be received in the bridge element,
wherein when the secondary joist (100) is inserted into each of the at least two joists, the secondary joist is substantially perpendicular to the at least two joist, and forms a planar surface to receive a flooring surface, and
wherein the demountable floor anchor system can be partly or completely demounted and reassembled in a first configuration or a different configuration.

9. The system for building a demountable and reassemblable building structure of claim 5, further comprising a demountable floor structure comprising a plurality of secondary joists (100), wherein the joists (20) and the secondary joists (100) are substantially perpendicular to each other and form a planar surface to receive a flooring surface.

10. The measurement free system for building a demountable and reassemblable building structure of any one of the previous claims, further comprising a demountable furring strip support (120) comprising:
• a demountable furring strip gripping member (122) comprising
at least one of
a spacer (124), and
a first and second hook member (126) connected at opposite ends of the spacer; and
• a demountable attachment member (128), to be received in a compatible attachment receiving element and connected to the demountable furring strip gripping member.

11. The measurement free system for building a demountable and reassemblable building structure of any one of the previous claims, further comprising a demountable furring strip support (210) comprising:
• at least one elongated planar member (212) comprising
at least one furring strip gripping member (214) having a first and second hook member to secure a furring strip; and
a plurality of regularly spaced apart attachment receiving elements to receive compatible attachments.

12. The measurement free system for building a demountable and reassemblable building structure of any one of the previous claims, further comprising a demountable electrical junction box support (160) comprising:
• a demountable furring strip gripping member (162) comprising at least one of
a spacer (164), and
a hook member (166) connected to the spacer; and
• a housing (168), connected to the demountable furring strip gripping member, the housing comprising an aperture to receive at least one electrical junction box.

13. The system for building a demountable and reassemblable building structure of claim 5, further comprising a kit for a demountable and reassemblable frame (1400) comprising:
• a frame assembly (1410) having an interior and an exterior surface comprising
at least two frame assembly attachments (1430) facing the interior surface to secure the frame assembly to a respective first and second substantially parallel post (10),
the post having a plurality of regularly spaced apart attachment receiving elements to receive the frame assembly attachments (1430);
• a first and second furring strip receiving bar (1420) comprising at least one furring strip gripping member to receive at least one furring strip;
the furring strip receiving bar adapted to be secured substantially perpendicular to the first and second substantially parallel posts (10) to form a border around the frame assembly.

14. The system for building a demountable and reassemblable building structure of claim 5, further comprising a kit for a demountable and reassemblable frame comprising:
• a frame assembly (200) having
at least two horizontal frame element (230), substantially parallel to one another,
at least two vertical element (220) substantially parallel to one another, defining an aperture (210), and
• at least two frame assembly attachments (250) to secure the frame assembly to a respective first and second substantially parallel post wherein the post (10) having a plurality of regularly spaced apart attachment receiving elements to receive the frame assembly attachments.

## Patentansprüche

1. Messungsfreies System zum Errichten einer demontierbaren und wieder zusammensetzbaren Baustruktur, Folgendes umfassend:
- mehrere vorgefertigte Baukomponenten, die mehrere Pfosten (10) und Träger (20) umfassen, die jeweils mehrere regelmäßig beabstandete Befestigungsaufnahmeelemente (12, 14, 22, 24) aufweisen,
- mehrere abnehmbare Befestigungen für den Eingriff in die regelmäßig beabstandeten Befestigungsaufnahmeelemente (12, 14, 22, 24), um die mehreren Pfosten (10) und Träger (12) demontierbar zu verbinden,
wobei die regelmäßig beabstandeten Befestigungsaufnahmeelemente (12, 14, 22, 24) das Zusammensetzen messungsfreier Baustrukturen ermöglichen, die demontierbar und in verschiedenen Gestaltungen wieder zusammensetzbar sind, und ein demontierbares Deckenverankerungssystem, Folgendes umfassend:
• mindestens zwei Träger (20), wobei jeder der Träger (20) Aufnahmeelemente (112) umfasst, die an einer festgelegten Position entlang des Trägers (20) für die Aufnahme eines Deckenunterkonstruktionsstreifen-Aufnahmeelements (110) angeordnet sind,
• mindestens ein Deckenunterkonstruktionsstreifen-Aufnahmeelement (110), das ein Greifelement (116) umfasst und dafür eingerichtet ist, in dem Greifelement (116) mindestens einen Deckenunterkonstruktionsstreifen (130) aufzunehmen, wobei das mindestens eine Deckenunterkonstruktionsstreifen-Aufnahmeelement (110) ein erstes Ende zum Anbringen an ein erstes Aufnahmeelement (112) eines ersten Trägers (20) und ein zweites Ende zum Anbringen an ein zweites Aufnahmeelement (112) eines zweiten Trägers (20) aufweist und senkrecht zum ersten Träger (20) und zum zweiten Träger (20) angeordnet ist,
• mindestens einen Deckenunterkonstruktionsstreifen (130), der in das Greifelement (116) des Deckenunterkonstruktionsstreifen-Aufnahmeelements (110) einzusetzen ist, wobei, wenn zwei oder mehr Deckenunterkonstruktionsstreifen (130) in das Deckenunterkonstruktionsstreifen-Aufnahmeelement (110) eingesetzt sind, diese eine ebene Fläche zur Aufnahme einer Deckenfläche bilden.

2. System nach Anspruch 1, wobei jeder Träger (20) eine obere Fläche zur Aufnahme eines Bodens (T) und eine untere Fläche zur Aufnahme der Deckenfläche umfasst und wobei die Aufnahmeelemente (112), die dafür eingerichtet sind, das Deckenunterkonstruktionsstreifen-Aufnahmeelement (110) aufzunehmen, in der unteren Fläche der Träger (20) bereitgestellt sind.

3. System nach Anspruch 1, wobei der Träger (20) mindestens einen länglichen Trägerabschnitt (20A/20B) umfasst, die miteinander zu verbinden sind, um den Träger (20) zu bilden, und mindestens ein Fixierungselement, um die mindestens zwei länglichen Trägerabschnitte (20A/20B) zum Bilden des Trägers zu verbinden.

4. System nach Anspruch 3, wobei die Pfosten (10) und die Träger (20) ferner jeweils mindestens eine Öffnung (18) für die Aufnahme von Rohrinstallationen, Kabelschächten, Heizungs-, Belüftungs- Klimaanlagenleitungen (HLK) und/oder zentrale Vakuumleitungen umfassen.

5. System nach einem der vorhergehenden Ansprüche, Folgendes umfassend:
eine Außenwandplatte (32), die ein Inneres und ein Äußeres der Struktur definiert und eine erste Außenwandplatten-Befestigung (40) und eine zweite Außenwandplatten-Befestigung (40) umfasst,
mindestens zwei im Wesentlichen längliche Pfosten (10), wobei jeder der Pfosten mindestens ein Befestigungsaufnahmeelement (14) zur Aufnahme einer entsprechenden der ersten und der zweiten Außenwandplatten-Befestigung (40) umfasst, so dass die Wandplatte von den mindestens zwei Pfosten (10) beabstandet ist und zwischen der Platte und jedem der Pfosten ein Zwischenraum definiert ist, wenn die erste und die zweite Außenwandplatten-Befestigung (40) in den Befestigungsaufnahmeelementen (14) aufgenommen sind, und
eine Isolierung (36), die dafür eingerichtet ist, zwischen den Pfosten angrenzend an die Wandplatte eingesetzt zu sein,
wobei der Zwischenraum eine Wärmebrückenwirkung zwischen dem Inneren und dem Äußeren der Struktur wesentlich verringert und wobei die Baustruktur dafür eingerichtet ist, in einer ersten Gestaltung oder einer anderen Gestaltung teilweise oder vollständig demontiert und wieder zusammengesetzt zu werden.

6. Messungsfreies System zum Errichten einer demontierbaren und wieder zusammensetzbaren Baustruktur nach einem der vorhergehenden Ansprüche, ferner eine demontierbare Außenwandplatten-Befestigung (40) umfassend, die Folgendes umfasst:
• ein erstes demontierbares Befestigungselement (42), das in einem kompatiblen Befestigungsaufnahmeelement aufzunehmen ist,
• ein zweites demontierbares Befestigungselement (44), das eine kompatible Außenwandplatte aufnimmt, und
• einen Abstandshalter (46), der das erste und das zweite Befestigungselement verbindet.

7. Messungsfreies System zum Errichten einer demontierbaren und wieder zusammensetzbaren Baustruktur nach einem der vorhergehenden Ansprüche, ferner einen Pfostenanker (50) umfassend, der entlang der drei Dimensionsachsen justierbar ist und Folgendes umfasst:
ein Sockelelement (52), das in einem Gebäudefundament zu verankern ist und ein Montageelement daran aufweist, wobei das Montageelement entlang einer ersten Achse justierbar ist, und
ein Halteelement (60) mit
einem Sitz (62), der an das Montageelement montierbar und entlang einer zweiten Achse justierbar ist, und
eine Krone (64), die einen ersten Pfosten aufnimmt und entlang einer dritten Achse justierbar ist,
wobei der Pfostenanker (50) entlang der drei Dimensionsachsen justierbar ist, um den Pfostenanker korrekt am Fundament auszurichten und einen daran befestigten Pfosten zu nivellieren.

8. System zum Errichten einer demontierbaren und wieder zusammensetzbaren Baustruktur nach Anspruch 5, ferner einen Bausatz für ein demontierbares Bodenverankerungssystem umfassend, das Folgendes umfasst:
mindestens zwei Träger (20), wobei jeder der Träger mindestens ein Brückenelement (92) umfasst, das an einer festgelegten Position entlang des Trägers angeordnet ist, und
mindestens einen sekundären Träger (100), der an jedem Ende einen Ansatz (102) umfasst, der im Brückenelement aufzunehmen ist,
wobei der sekundäre Träger im Wesentlichen senkrecht zu den mindestens zwei Trägern liegt und eine ebene Fläche für die Aufnahme einer Bodenbelagsfläche bildet, wenn der sekundäre Träger (100) in jeden der mindestens zwei Träger eingesetzt ist, und
wobei das demontierbare Bodenverankerungssystem in einer ersten Gestaltung oder einer anderen Gestaltung teilweise oder vollständig demontiert und wieder zusammengesetzt werden kann.

9. System zum Errichten einer demontierbaren und wieder zusammensetzbaren Baustruktur nach Anspruch 5, ferner eine demontierbare Bodenstruktur umfassend, die mehrere sekundäre Träger (100) umfasst, wobei die Träger (20) und die sekundären Träger (100) im Wesentlichen senkrecht zueinander liegen und eine ebene Fläche zur Aufnahme einer Bodenbelagsfläche bilden.

10. Messungsfreies System zum Errichten einer demontierbaren und wieder zusammensetzbaren Baustruktur nach einem der vorhergehenden Ansprüche, ferner eine demontierbare Deckenunterkonstruktionsstreifen-Abstützung (120) umfassend, die Folgendes umfasst:
• ein demontierbares Deckenunterkonstruktionsstreifen-Greifelement (122), das mindestens einen Abstandshalter (124) und/oder ein erstes und ein zweites Hakenelement (128) umfasst, das mit entgegengesetzten Enden des Abstandshalters verbunden ist, und
• ein demontierbares Befestigungselement (128), das in einem kompatiblen Befestigungsaufnahmeelement aufzunehmen ist und mit dem demontierbaren Deckenunterkonstruktionsstreifen-Greifelement verbunden ist.

11. Messungsfreies System zum Errichten einer demontierbaren und wieder zusammensetzbaren Baustruktur nach einem der vorhergehenden Ansprüche, ferner eine demontierbare Deckenunterkonstruktionsstreifen-Abstützung (210) umfassend, die Folgendes umfasst:
• mindestens ein längliches planares Element, umfassend:
mindestens ein Deckenunterkonstruktionsstreifen-Greifelement (214) mit einem ersten und einem zweiten Hakenelement zum Fixieren eines Deckenunterkonstruktionsstreifens und
mehrere regelmäßig beabstandete Befestigungsaufnahmeelemente zur Aufnahme kompatibler Befestigungen.

12. Messungsfreies System zum Errichten einer demontierbaren und wieder zusammensetzbaren Baustruktur nach einem der vorhergehenden Ansprüche, ferner eine demontierbare Abstützung (160) eines elektrischen Anschlusskastens umfassend, die Folgendes umfasst:
• ein demontierbares Deckenunterkonstruktionsstreifen-Greifelement (162), das
einen Abstandshalter (164) und/oder
ein Hakenelement (166) umfasst, das mit dem Abstandshalter verbunden ist, und
• ein Gehäuse (168), das mit dem demontierbaren Deckenunterkonstruktionsstreifen-Greifelement verbunden ist, wobei das Gehäuse eine Öffnung für die Aufnahme mindestens eines elektrischen Anschlusskastens umfasst.

13. System zum Errichten einer demontierbaren und wieder zusammensetzbaren Baustruktur nach Anspruch 5, ferner einen Bausatz für einen demontierbaren und wieder zusammensetzbaren Rahmen (1400) umfassend, der Folgendes umfasst:
• eine Rahmenanordnung (1410) mit einer Innen- und einer Außenfläche, Folgendes umfassend:
mindestens zwei Rahmenanordnungsbefestigungen (1430), die der Innenfläche zugewandt sind, um die Rahmenanordnung jeweils an einem ersten und einem zweiten im Wesentlichen parallelen Pfosten (10) zu fixieren, wobei der Pfosten mehrere regelmäßig beabstandete Befestigungsaufnahmeelemente aufweist, um die Rahmenanordnungsbefestigungen (1430) aufzunehmen,
• eine erste und eine zweite Deckenunterkonstruktionsstreifen-Aufnahmestange (1420), die mindestens ein Deckenunterkonstruktionsstreifen-Greifelement für die Aufnahme mindestens eines Deckenunterkonstruktionsstreifens umfasst,
wobei die Deckenunterkonstruktionsstreifen-Aufnahmestange dafür eingerichtet ist, im Wesentlichen senkrecht zum ersten und zweiten im Wesentlichen parallelen Pfosten (10) zu liegen, um eine Grenze um die Rahmenanordnung zu bilden.

14. System zum Errichten einer demontierbaren und wieder zusammensetzbaren Baustruktur nach Anspruch 5, ferner einen Bausatz für einen demontierbaren und wieder zusammensetzbaren Rahmen umfassend, der Folgendes umfasst:
• eine Rahmenanordnung (200) mit
mindestens zwei horizontalen Rahmenelementen (230), die im Wesentlichen parallel zueinander liegen,
mindestens zwei vertikalen Elementen (220), die im Wesentlichen parallel zueinander liegen und eine Öffnung (210) definieren, und
• mindestens zwei Rahmenanordnungsbefestigungen (250), um die Rahmenanordnung jeweils an dem ersten und dem zweiten im Wesentlichen parallelen Pfosten zu fixieren,
wobei der Pfosten (10) mehrere regelmäßig beabstandete Befestigungsaufnahmeelemente zur Aufnahme der Rahmenanordnungsbefestigungen aufweist.

## Revendications

1. Système sans mesure pour construire une structure de construction démontable et remontable comprenant :
une pluralité de composants de construction préfabriqués comprenant une pluralité de montants (10) et de solives (20), ayant chacun une pluralité d'éléments de réception de fixation régulièrement espacés (12, 14, 22, 24) ;
une pluralité de fixations amovibles pour la mise en prise dans les éléments de réception de fixation régulièrement espacés (12, 14, 22, 24) pour assembler de manière démontable la pluralité de montants (10) et de solives (12),
dans lequel les éléments de réception de fixation régulièrement espacés (12, 14, 22, 24) permettent d'assembler des structures de construction sans mesure qui sont démontables et remontables dans différentes configurations ; et un système d' ancrage de plafond démontable comprenant :
au moins deux solives (20), chacune desdites solives (20) comprenant des éléments de réception (112) positionnés dans une position prédéterminée le long de la solive (20) pour recevoir un élément de réception de fourrure de plafond (110) ;
au moins un élément de réception de fourrure de plafond (110) comprenant un élément de préhension (116) et adapté pour recevoir au moins une fourrure (130) à l'intérieur de l'élément de préhension (116) ; ledit au moins un élément de réception de fourrure de plafond (110) ayant une première extrémité pour se fixer à un premier élément de réception (112) d'une première solive (20) et une seconde extrémité pour se fixer à un second élément de réception (112) d'une seconde solive (20) et étant disposée perpendiculairement à la première solive (20) et la seconde solive (20) ;
au moins une fourrure (130) à insérer dans l'élément de préhension (116) de l'élément de réception de fourrure de plafond (110) ; dans lequel lorsque deux fourrures ou plus (130) sont insérées dans ledit élément de réception de fourrure de plafond (110), elles forment une surface plane pour recevoir une surface de plafond.

2. Système selon la revendication 1, dans lequel chaque solive (20) comprend une surface supérieure pour recevoir un plancher (T) et une surface inférieure pour recevoir la surface de plafond, et dans lequel les éléments de réception (112) adaptés pour recevoir l'élément de réception de fourrure de plafond (110) sont prévus dans la surface inférieure des solives (20).

3. Système selon la revendication 1, dans lequel la solive (20) comprend au moins une des sections de solive allongées (20A/20B) destinées à être raccordées ensemble afin de former la solive (20) et au moins un élément de fixation pour assembler les au moins deux sections de solive allongées (20A/20B) ensemble afin de former la solive.

4. Système selon la revendication 3, dans lequel les montants (10) et les solives (20) comprennent chacune en outre au moins une ouverture (18) pour recevoir la plomberie, le câblage, le chauffage, la ventilation, les conduits de climatisation (HVAC) et/ou les conduits d'aspiration centralisée.

5. Système selon l'une quelconque des revendications précédentes, comprenant :
un panneau de paroi extérieure (32) définissant une intérieur et un extérieur de la structure comprenant une première fixation de panneau de paroi extérieure (40) et une seconde fixation de panneau de paroi extérieure (40) ;
au moins deux montants sensiblement allongés (10), chacun des montants comprenant au moins un élément de réception de fixation (14) pour recevoir une fixation respective parmi les première et seconde fixations de panneau de paroi extérieure (40) de sorte que lorsque les première et seconde fixations de panneau de paroi (40) sont reçues par les éléments de réception de fixation (14), le panneau de paroi est espacé des au moins deux montants (10) définissant un espace entre le panneau et chacun des montants ; et
une isolation (36) adaptée pour être mise en prise entre chacun des montants, de manière adjacente au panneau de paroi,
dans lequel l'espace réduit sensiblement un effet de pont thermique entre l'intérieur et l'extérieur de la structure et dans lequel la structure de construction est adaptée pour être partiellement ou complètement démontée et remontée dans une première configuration ou une configuration différente.

6. Système sans mesure pour construire une structure de construction démontable et remontable selon l'une quelconque des revendications précédentes, comprenant en outre une fixation de panneau de paroi extérieure démontable (40) comprenant :
un premier élément de fixation démontable (42) destiné à être reçu dans un élément de réception de fixation compatible ;
un second élément de fixation démontable (44) pour recevoir un élément de paroi extérieure compatible ; et
un dispositif d'espacement (46) raccordant les premier et second éléments de fixation.

7. Système sans mesure pour construire une structure de construction démontable et remontable selon l'une quelconque des revendications précédentes, comprenant en outre un ancrage de montant (50) ajustable le long des axes tridimensionnels comprenant :
un élément de base (52) à ancrer dans une fondation de construction et ayant un élément de montage sur ce dernier, l'élément de montage étant ajustable le long d'un premier axe ; et
un élément de retenue (60) ayant :
un siège (62) pouvant être monté sur l'élément de montage et étant ajustable le long d'un deuxième axe, et
une couronne (64) pour recevoir un montant et étant ajustable le long d'un troisième axe,
dans lequel l'ancrage de montant (50) est ajustable le long des axes tridimensionnels pour aligner correctement l'ancrage de montant à la fondation et mettre à niveau un montant fixé à ce dernier.

8. Système pour construire une structure de construction démontable et remontable selon la revendication 5, comprenant en outre un kit pour un système d'ancrage de plancher démontable, comprenant :
au moins deux solives (20), chacune des solives comprenant au moins un élément de pont (92) positionné dans un position prédéterminée le long de la solive ; et
au moins une solive secondaire (100) comprenant, à chaque extrémité, une patte (102) destinée à être reçue dans l'élément de pont,
dans lequel lorsque la solive secondaire (100) est insérée dans chacune des au moins deux solives, la solive secondaire est sensiblement perpendiculaire aux au moins deux solives, et forme une surface plane pour recevoir une structure de plancher, et
dans lequel le système d' ancrage de plancher démontable peut être partiellement ou complètement démonté et remonté dans une première configuration ou une configuration différente.

9. Système pour construire une structure de construction démontable et remontable selon la revendication 5, comprenant en outre une structure de plancher démontable comprenant une pluralité de solives secondaires (100), dans lequel les solives (20) et les solives secondaires (100) sont sensiblement perpendiculaires entre elles et forment une surface plane pour recevoir une surface de plancher.

10. Système sans mesure pour construire une structure de construction démontable et remontable selon l'une quelconque des revendications précédentes, comprenant en outre un support de fourrure démontable (120) comprenant :
un élément de préhension de fourrure démontable (122) comprenant au moins l'un parmi :
un dispositif d'espacement (124), et
un premier et un second élément de crochet (126) raccordés au niveau des extrémités opposées du dispositif d'espacement ; et
un élément de fixation démontable (128) destiné à être reçu dans un élément de réception de fixation compatible et raccordé à l'élément de préhension de fourrure démontable.

11. Système sans mesure pour construire une structure de construction démontable et remontable selon l'une quelconque des revendications précédentes, comprenant en outre une structure de fourrure démontable (210) comprenant :
au moins un élément plan allongé comprenant :
au moins un élément de préhension de fourrure (214) ayant un premier et un second élément de crochet pour fixer une fourrure ; et
une pluralité d'éléments de réception de fixation régulièrement espacés pour recevoir des fixations compatibles.

12. Système sans mesure pour construire une structure de construction démontable et remontable selon l'une quelconque des revendications précédentes, comprenant en outre un support de boîte de jonction électrique démontable (160) comprenant :
un élément de préhension de fourrure démontable (162) comprenant au moins l'un parmi :
un dispositif d'espacement (164), et
un élément de crochet (166) raccordé au dispositif d'espacement ; et
un boîtier (168) raccordé à l'élément de préhension de fourrure démontable, le boîtier comprenant une ouverture pour recevoir au moins une boîte de jonction électrique.

13. Système pour construire une structure de construction démontable et remontable selon la revendication 5, comprenant en outre un kit pour un châssis démontable et remontable (1400) comprenant :
un ensemble de châssis (1410) ayant une surface intérieure et une surface extérieure comprenant :
au moins deux fixations d'ensemble de châssis (1430) faisant face à la surface intérieure pour fixer l'ensemble de châssis sur des premier et second montants sensiblement parallèles (10) respectifs,
le montant ayant une pluralité d'éléments de réception de fixation régulièrement espacés pour recevoir les fixations d'ensemble de châssis (1430) ;
une première et seconde barrie de réception de fourrure (1420) comprenant :
au moins un élément de préhension de fourrure pour recevoir au moins une fourbure ;
la barre de réception de fourrure adaptée pour être fixée sensiblement perpendiculairement aux premier et second montants sensiblement parallèles (10) afin de former une bordure autour de l'ensemble de châssis.

14. Système pour construire une structure de construction démontable et remontable selon la revendication 5, comprenant en outre un kit pour un châssis démontable et remontable comprenant :
un ensemble de châssis (200) ayant :
au moins deux éléments de châssis horizontaux (230) sensiblement parallèles entre eux,
au moins deux éléments verticaux (220) sensiblement parallèles entre eux, définissant une ouverture (210), et
au moins deux fixations d'ensemble de châssis (250) pour fixer l'ensemble de châssis sur des premier et second montants sensiblement parallèles respectifs,
dans lequel le montant (10) a une pluralité d'éléments de réception de fixation régulièrement espacés pour recevoir les fixations d'ensemble de châssis.
